# EUROPEAN PATENT APPLICATION

(11) **EP 4 686 290 A1**
(43) Date of publication of application: **28.01.2026**
(21) Application number: 24791910.3
(22) Date of filing: 11.04.2024
(51) Int. Cl.: H04W 72/0453

(54) **PPDU TRANSMISSION METHOD AND APPARATUS BASED ON FREQUENCY BAND STITCHING**

(30) Priority: 20.04.2023 CN 202310465406
(71) Applicant: Huawei Technologies Co., Ltd., Shenzhen, Guangdong 518129 (CN)
(72) Inventor: QIAN, Bin, Shenzhen, Guangdong 518129 (CN); LIU, Chenchen, Shenzhen, Guangdong 518129 (CN); PENG, Xiaohui, Shenzhen, Guangdong 518129 (CN); HUANG, Lei, Shenzhen, Guangdong 518129 (CN); YANG, Xun, Shenzhen, Guangdong 518129 (CN)
(74) Representative: Grünecker Patent- und Rechtsanwälte PartG mbB
(86) International application number: PCT/CN2024/087209
(87) International publication number: WO 2024/217325

(57) **Abstract**

This application relates to a PPDU transmission method based on frequency band stitching and a related apparatus. The method includes: A communication apparatus generates and sends a PPDU, where the PPDU includes a first segment and a second segment, transmission frequency bands of the two segments are different, and an inactive segment exists between the two segments; and the communication apparatus does not transmit a UWB pulse within duration of the inactive segment. According to this application, a frequency switching requirement can be met. This application is applied to a UWB-based WPAN system, a sensing system, or the like, including 802.15 series protocols, for example, 802.15.4ab or a next-generation standard of 802.15.4ab. This application may be further applied to a WLAN system supporting 802.11 series protocols such as a next-generation protocol of 802.11ax like 802.11be, Wi-Fi 7, or EHT, a next-generation protocol of 802.11be like Wi-Fi 8 or UHR, or Wi-Fi AI.

## Description

This application claims priority to Chinese Patent Application No. 202310465406.6, filed with the China National Intellectual Property Administration on April 20, 2023 and entitled "PPDU TRANSMISSION METHOD BASED ON FREQUENCY BAND STITCHING AND APPARATUS", which is incorporated herein by reference in its entirety.

### TECHNICAL FIELD

This application relates to the field of communication technologies, and in particular, to a physical layer protocol data unit (physical layer protocol data unit, PPDU) transmission method based on frequency band stitching and an apparatus.

### BACKGROUND

As ultra-wideband (ultra-wideband, UWB) enters the civilian field, ultra-wideband (UWB) wireless communication has become one of physical layer technologies for short-distance and high-speed wireless networks. An ultra-wideband (UWB) technology is a wireless carrier communication technology that can transmit data, for example, by using nanosecond-level non-sinusoidal wave narrow pulses, and therefore occupies a very wide spectrum range. For its narrow pulses and low radiation spectral density, a UWB system has advantages of a strong multipath resolution capability, low power consumption, high confidentiality, and the like, and is mainly applied to sensing and ranging scenarios.

The institute of electrical and electronics engineers (institute of electrical and electronics engineers, IEEE) has incorporated the UWB technology into IEEE 802 series wireless standards of the institute of electrical and electronics engineers and has released a high-speed wireless personal area network (wireless personal area network, WPAN) standard IEEE 802.15.4a based on the UWB technology, and an evolved version IEEE 802.15.4z of the IEEE 802.15.4a. A next-generation UWB wireless personal area network (WPAN) standard 802.15.4ab is under discussion. One of the focuses of 802.15.4ab is the use of UWB pulses for sensing. In a sensing application, a distance, an angle, a speed, and other and of a target (target) are extracted by detecting an echo of a UWB signal on the target. Sensing performance is directly proportional to an effective bandwidth. That is, a wider effective bandwidth indicates higher sensing precision. However, limited by performance of an analog-to-digital converter (analog digital converter, ADC), a UWB device with low costs and low power consumption is incapable of processing a high-bandwidth signal. In a possible solution, a plurality of frequency bands with bandwidths of 499.2 MHz (megahertz) are stitched to form a frequency band with a wider bandwidth, to improve sensing performance of the UWB device with low costs and low power consumption.

A current frequency band stitching solution is not fully developed, and cannot meet a frequency switching requirement.

### SUMMARY

Embodiments of this application provide a PPDU transmission method based on frequency band stitching and an apparatus, to improve a frequency band stitching solution, so that there is a sufficient time gap between all parts of intra-packet frequency band stitching to complete frequency switching, thereby meeting a frequency switching requirement.

The following describes this application from different aspects. It should be understood that, for the following implementations and beneficial effect of the different aspects, refer to each other.

According to a first aspect, this application provides a PPDU transmission method based on frequency band stitching. The method includes: A communication apparatus generates and sends a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment (inactive segment) exists between the first segment and the second segment. The communication apparatus does not transmit a UWB pulse within duration of the inactive segment. The inactive segment may be used for frequency switching or frequency band adjustment. In other words, the communication apparatus may perform frequency band adjustment or frequency switching within duration of the inactive segment. For example, the communication apparatus may switch from the transmission frequency band of the first segment to the transmission frequency band of the second segment within duration of the inactive segment.

In this application, that the transmission frequency bands are different may be understood as that the transmission frequency bands do not completely overlap, that is, the transmission frequency bands partially overlap, or the transmission frequency bands do not overlap (an overlapping factor is 0). If the transmission frequency bands are the same, it indicates that the transmission frequency bands overlap, or the transmission frequency bands completely overlap.

In this application, the inactive segment (inactive segment) is introduced into the PPDU, and a transmit end (that is, the foregoing communication apparatus) is constrained not to transmit the UWB pulse in the inactive segment, to increase a time gap between all parts of intra-packet frequency band stitching, meet a frequency switching requirement, and improve a frequency band stitching solution.

With reference to the first aspect, in a possible implementation, before the communication apparatus sends the PPDU, the method may further include: The communication apparatus sends a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

In this application, "a frequency band used for frequency band stitching" or "a UWB channel used for frequency band stitching" may be understood as a transmission frequency band or a UWB channel of a segment used for frequency band stitching, or may be understood as a transmission frequency band or a UWB channel of a sensing fragment (sensing fragment, SF). For descriptions of the sensing fragment (SF), refer to descriptions in the following embodiments. Details are not described herein.

In this application, the inactive segment is introduced into the PPDU, to increase the time gap between all parts of intra-packet frequency band stitching and meet the frequency switching requirement. In addition, the corresponding control message of frequency band stitching is proposed, and intra-packet frequency band stitching, inter-packet frequency band stitching, out-of-sequence channel frequency band stitching, and in-sequence channel frequency band stitching are comprehensively considered, to improve and support frequency band stitching.

According to a second aspect, this application provides a PPDU transmission method based on frequency band stitching. The method includes: A communication apparatus receives a PPDU, where the PPDU includes a plurality of segments (segments) used for sensing, and the plurality of segments used for sensing include a first segment and a second segment; and the communication apparatus performs sensing measurement based on the first segment and the second segment. A transmission frequency band of the first segment is different from a transmission frequency band of the second segment, and an inactive segment exists between the first segment and the second segment. Because a transmit end does not transmit a UWB pulse within duration of the inactive segment, a receive end does not receive the UWB pulse within the duration of the inactive segment either.

For the receive end, the inactive segment may alternatively be used for frequency switching or frequency band adjustment. For example, the communication apparatus switches from the transmission frequency band of the first segment to the transmission frequency band of the second segment within the duration of the inactive segment, to receive the second segment on the transmission frequency band of the second segment after receiving the first segment.

With reference to the second aspect, in a possible implementation, before the communication apparatus receives the PPDU, the method may further include: The communication apparatus receives a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

According to a third aspect, this application provides a communication apparatus. The communication apparatus includes a processing unit and a transceiver unit. The processing unit is configured to generate a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the transceiver unit is configured to send the PPDU. The communication apparatus does not transmit a UWB pulse within duration of the inactive segment. The inactive segment may be used for frequency switching or frequency band adjustment.

With reference to the third aspect, in a possible implementation, the transceiver unit is further configured to send a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

According to a fourth aspect, this application provides a communication apparatus. The communication apparatus includes a processing unit and a transceiver unit. The transceiver unit is configured to receive a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the processing unit is configured to perform sensing measurement based on the first segment and the second segment. The communication apparatus does not receive a UWB pulse within duration of the inactive segment. The inactive segment may be used for frequency switching or frequency band adjustment.

With reference to the fourth aspect, in a possible implementation, the transceiver unit is further configured to receive a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

In the third aspect or the fourth aspect, for specific descriptions of the transceiver unit and the processing unit, refer to apparatus embodiments described below. For beneficial effect of the third aspect and the fourth aspect, refer to related descriptions of the first aspect and the second aspect described above. Details are not described herein again.

In a possible implementation of any one of the foregoing aspects, at least one of the plurality of segments used for sensing belongs to a sensing (sensing, SENS) field (SENS field) of the PPDU. In a possible implementation, at least one of the plurality of segments used for sensing belongs to a synchronization (synchronization, SYNC) field of the PPDU.

For example, if the synchronization field (SYNC field) of the PPDU does not participate in sensing measurement, the plurality of segments used for sensing all belong to the sensing field. For example, the plurality of segments used for sensing are a plurality of sensing segments (SENS segment). If the synchronization field (SYNC field) of the PPDU participates in sensing measurement, at least one of the plurality of segments used for sensing belongs to the sensing field of the PPDU, and the at least one of the plurality of segments used for sensing belongs to the synchronization field.

In this application, that the synchronization field participates in sensing measurement may be understood as that some (synchronization) symbols in the synchronization field are used for sensing measurement. For example, some symbols in the synchronization field may be used for synchronization, and the other symbols may be used for sensing measurement.

In this application, the synchronization field is allowed to participate in sensing measurement. In other words, frequency band stitching may be performed between the synchronization field and a subsequent sensing segment. In this way, sensing performance can be improved.

In a possible implementation of any one of the foregoing aspects, a time length of the inactive segment is different from a time length of the first segment or the second segment. For example, the time length of the inactive segment may depend on time required for frequency band switching. For example, the time length of the inactive segment between the first segment and the second segment may be greater than or equal to time required for switching from the transmission frequency band of the first segment to the transmission frequency band of the second segment.

Time lengths of the first segment and the second segment may be the same or may be different. For details, refer to descriptions in the following embodiments.

In this application, the time length of the inactive segment may be designed as required, so that there is a sufficient time gap between all parts of intra-packet frequency band stitching to complete frequency switching, thereby meeting a frequency switching requirement.

According to a fifth aspect, this application provides a PPDU transmission method based on frequency band stitching. The method includes: A communication apparatus generates and sends a PPDU, where the PPDU includes a plurality of segments (segments) used for sensing, the plurality of segments used for sensing include a first segment and a second segment, and a time gap (gap) between the first segment and the second segment is greater than duration of one sensing symbol. The time gap (gap) may be used for frequency switching or frequency band adjustment. In other words, the communication apparatus may perform frequency band adjustment or frequency switching within the time gap (gap). For example, the communication apparatus may switch from a transmission frequency band of the first segment to a transmission frequency band of the second segment within the time gap (gap).

In this application, a length of the gap is extended in the PPDU, to increase a time gap between all parts of intra-packet frequency band stitching, thereby meeting a frequency switching requirement and improving a frequency band stitching solution.

With reference to the fifth aspect, in a possible implementation, that a communication apparatus sends a PPDU includes: The communication apparatus transmits a UWB pulse within duration of the first segment and the second segment.

With reference to the fifth aspect, in a possible implementation, before the communication apparatus sends the PPDU, the method further includes: The communication apparatus sends enabling information, where the enabling information indicates whether to enable intra-packet frequency band stitching. When the enabling information indicates to enable intra-packet frequency band stitching, the time gap between the first segment and the second segment is greater than the duration of the one sensing symbol. When the enabling information indicates not to enable intra-packet frequency band stitching, the time gap between the first segment and the second segment is equal to the duration of the sensing symbol. Herein, the enabling information indicates to enable intra-packet frequency band stitching.

In this application, the enabling information indicates whether to enable intra-packet frequency band stitching. When intra-packet frequency band stitching is enabled, a longer time gap is used between the first segment and the second segment, to meet a frequency switching requirement. When intra-packet frequency band stitching is not enabled, an existing standard, for example, a design of 802. 15.4ab, is still used. This is highly compatible and easy to implement.

With reference to the fifth aspect, in a possible implementation, before the communication apparatus sends the PPDU, the method further includes: The communication apparatus sends a control message, where the control message indicates one or more of the following: a UWB channel index corresponding to a segment used for sensing, or whether a synchronization field is used for frequency band stitching. In some scenarios, the enabling information may belong to content of the control message.

In a possible implementation, the control message further indicates one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

This application further provides the corresponding control message of frequency band stitching, and intra-packet frequency band stitching, inter-packet frequency band stitching, out-of-sequence channel frequency band stitching, and in-sequence channel frequency band stitching are comprehensively considered, to improve and support frequency band stitching.

According to a sixth aspect, this application provides a PPDU transmission method based on frequency band stitching. The method includes: A communication apparatus receives a PPDU, where the PPDU includes a plurality of segments (segments) used for sensing, and the plurality of segments used for sensing include a first segment and a second segment; and the communication apparatus performs sensing measurement based on the first segment and the second segment. A time gap (gap) between the first segment and the second segment is greater than duration of one sensing symbol. For a receive end, the time gap (gap) may also be used for frequency switching or frequency band adjustment. For example, the communication apparatus switches from a transmission frequency band of the first segment to a transmission frequency band of the second segment within the time gap (gap), to receive the second segment on the transmission frequency band of the second segment after receiving the first segment.

With reference to the sixth aspect, in a possible implementation, that a communication apparatus receives a PPDU includes: The communication apparatus receives a UWB pulse within duration of the first segment and the second segment.

With reference to the sixth aspect, in a possible implementation, before the communication apparatus receives the PPDU, the method further includes: The communication apparatus receives enabling information, where the enabling information indicates whether to enable intra-packet frequency band stitching. When the enabling information indicates to enable intra-packet frequency band stitching, the time gap between the first segment and the second segment is greater than the duration of the one sensing symbol. When the enabling information indicates not to enable intra-packet frequency band stitching, the time gap between the first segment and the second segment is equal to the duration of the sensing symbol. Herein, the enabling information indicates to enable intra-packet frequency band stitching.

With reference to the sixth aspect, in a possible implementation, before the communication apparatus receives the PPDU, the method further includes: The communication apparatus receives a control message, where the control message indicates one or more of the following: a UWB channel index corresponding to a segment used for sensing, or whether a synchronization field is used for frequency band stitching. In some scenarios, the enabling information may belong to content of the control message.

In a possible implementation, the control message further indicates one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

According to a seventh aspect, this application provides a communication apparatus. The communication apparatus includes a processing unit and a transceiver unit. The processing unit is configured to generate a PPDU, where the PPDU includes a plurality of segments (segments) used for sensing, the plurality of segments used for sensing include a first segment and a second segment, and a time gap between the first segment and the second segment is greater than duration of one sensing symbol; and the transceiver unit is configured to send the PPDU.

With reference to the seventh aspect, in a possible implementation, the transceiver unit is specifically configured to transmit a UWB pulse within duration of the first segment and the second segment.

With reference to the seventh aspect, in a possible implementation, the transceiver unit is further configured to send enabling information, where the enabling information indicates whether to enable intra-packet frequency band stitching. When the enabling information indicates to enable intra-packet frequency band stitching, the time gap between the first segment and the second segment is greater than the duration of the one sensing symbol. When the enabling information indicates not to enable intra-packet frequency band stitching, the time gap between the first segment and the second segment is equal to the duration of the sensing symbol. Herein, the enabling information indicates to enable intra-packet frequency band stitching.

With reference to the seventh aspect, in a possible implementation, the transceiver unit is further configured to send a control message, where the control message indicates one or more of the following: a UWB channel index corresponding to a segment used for sensing, or whether a synchronization field is used for frequency band stitching.

In a possible implementation, the control message further indicates one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

According to an eighth aspect, this application provides a communication apparatus. The communication apparatus includes a processing unit and a transceiver unit. The transceiver unit is configured to receive a PPDU, where the PPDU includes a plurality of segments (segments) used for sensing, the plurality of segments used for sensing include a first segment and a second segment, and a time gap between the first segment and the second segment is greater than duration of one sensing symbol; and the processing unit is configured to perform sensing measurement based on the first segment and the second segment.

With reference to the eighth aspect, in a possible implementation, the transceiver unit is specifically configured to receive a UWB pulse within duration of the first segment and the second segment.

With reference to the eighth aspect, in a possible implementation, the transceiver unit is further configured to receive enabling information, where the enabling information indicates whether to enable intra-packet frequency band stitching. When the enabling information indicates to enable intra-packet frequency band stitching, the time gap between the first segment and the second segment is greater than the duration of the one sensing symbol. When the enabling information indicates not to enable intra-packet frequency band stitching, the time gap between the first segment and the second segment is equal to the duration of the sensing symbol. Herein, the enabling information indicates to enable intra-packet frequency band stitching.

With reference to the eighth aspect, in a possible implementation, the transceiver unit is further configured to receive a control message, where the control message indicates one or more of the following: a UWB channel index corresponding to a segment used for sensing, or whether a synchronization field is used for frequency band stitching.

In a possible implementation, the control message further indicates one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

In the seventh aspect or the eighth aspect, for specific descriptions of the transceiver unit and the processing unit, refer to apparatus embodiments described below. For beneficial effect of the seventh aspect and the eighth aspect, refer to related descriptions of the fifth aspect and the sixth aspect described above. Details are not described herein again.

With reference to any one of the fifth aspect to the eighth aspect, in a possible implementation, time gaps (gap) in one PPDU are the same. In other words, time gaps between the plurality of segments used for sensing are the same. If intra-packet frequency band stitching is enabled, the time gaps between the plurality of segments used for sensing are all greater than the duration of the sensing symbol. The transmission frequency bands of the first segment and the second segment may be the same or may be different.

In this application, when intra-packet frequency band stitching is enabled, all time gaps in the PPDU are increased, and implementation is simple.

With reference to any one of the fifth aspect to the eighth aspect, in a possible implementation, time gaps (gap) in one PPDU may be different. The transmission frequency band of the first segment is different from the transmission frequency band of the second segment. The plurality of segments used for sensing further include a third segment and a fourth segment. A transmission frequency band of the third segment is the same as a transmission frequency band of the fourth segment, and a time gap between the third segment and the fourth segment is different from the time gap between the first segment and the second segment. For example, the time gap (gap) between the third segment and the fourth segment is equal to the duration of the sensing symbol. One of the third segment and the fourth segment may be the same as the first segment or the second segment. Certainly, the first segment, the second segment, the third segment, and the fourth segment may be different from each other. In short, a gap between segments on which frequency band switching needs to be performed in the PPDU may be set to be longer, for example, greater than the duration of the sensing symbol, and a gap between segments on which frequency band switching does not need to be performed may be set to be shorter, for example, less than or equal to the duration of the sensing symbol.

In this application, the gap between the segments on which frequency band switching needs to be performed in the PPDU is set to be longer, and the gap between the segments on which frequency band switching does not need to be performed is set to be shorter, so that the design is more flexible.

According to a ninth aspect, this application provides a PPDU transmission method based on frequency band stitching. The method includes: A communication apparatus generates and sends a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol. The communication apparatus does not transmit a UWB pulse within duration of the inactive symbol. The inactive symbol may be used for frequency switching or frequency band adjustment. In other words, the communication apparatus may perform frequency band adjustment or frequency switching within the duration of the inactive symbol. For example, the communication apparatus may switch from the transmission frequency band of the first symbol to the transmission frequency band of the second symbol within the duration of the inactive symbol.

In this embodiment of this application, the inactive symbol (inactive symbol) is introduced into the PPDU (for example, a segment of the PPDU), and a transmit end (that is, the foregoing communication apparatus) is constrained not to transmit the UWB pulse in the inactive symbol, to increase a time gap between all parts of intra-packet frequency band stitching, meet a frequency switching requirement, and improve a frequency band stitching solution.

With reference to the ninth aspect, in a possible implementation, before the communication apparatus sends the PPDU, the method may further include: The communication apparatus sends a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

This application further provides the corresponding control message of frequency band stitching, and intra-packet frequency band stitching, inter-packet frequency band stitching, out-of-sequence channel frequency band stitching, and in-sequence channel frequency band stitching are comprehensively considered, to improve and support frequency band stitching.

According to a tenth aspect, this application provides a PPDU transmission method based on frequency band stitching. The method includes: A communication apparatus receives a PPDU, where the PPDU includes a plurality of symbols (symbols) used for sensing, and the plurality of symbols used for sensing include a first symbol and a second symbol; and the communication apparatus performs sensing measurement based on the first symbol and the second symbol. A transmission frequency band of the first symbol is different from a transmission frequency band of the second symbol, and an inactive symbol exists between the first symbol and the second symbol. Because a transmit end does not transmit a UWB pulse within duration of the inactive symbol, a receive end does not receive the UWB pulse within the duration of the inactive symbol either.

For the receive end, the inactive symbol may also be used for frequency switching or frequency band adjustment. For example, the communication apparatus may switch from the transmission frequency band of the first symbol to the transmission frequency band of the second symbol within the duration of the inactive symbol, to receive the second symbol on the transmission frequency band of the second symbol after receiving the first symbol.

With reference to the tenth aspect, in a possible implementation, before the communication apparatus receives the PPDU, the method may further include: The communication apparatus receives a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

According to an eleventh aspect, this application provides a communication apparatus. The communication apparatus includes a processing unit and a transceiver unit. The processing unit is configured to generate a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the transceiver unit is configured to send the PPDU. The communication apparatus does not transmit a UWB pulse within duration of the inactive symbol. The inactive symbol may be used for frequency switching or frequency band adjustment.

With reference to the eleventh aspect, in a possible implementation, the transceiver unit is further configured to send a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

According to a twelfth aspect, this application provides a communication apparatus. The communication apparatus includes a processing unit and a transceiver unit. The transceiver unit is configured to receive a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the processing unit is configured to perform sensing measurement based on the first symbol and the second symbol. The inactive symbol may be used for frequency switching or frequency band adjustment.

With reference to the twelfth aspect, in a possible implementation, the transceiver unit is further configured to receive a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

In the eleventh aspect or the twelfth aspect, for specific descriptions of the transceiver unit and the processing unit, refer to apparatus embodiments described below. For beneficial effect of the eleventh aspect and the twelfth aspect described above, refer to the related descriptions in the ninth aspect and the tenth aspect described above. Details are not described herein again.

With reference to any one of the ninth aspect to the twelfth aspect, in a possible implementation, the inactive symbol and the first symbol and/or the second symbol belong to a same SENS segment of the sensing field. Alternatively, the inactive symbol and the first symbol and/or the second symbol belong to the synchronization field. Certainly, the inactive symbol, the first symbol, and the second symbol may belong to different segments.

According to a thirteenth aspect, this application provides an information exchange method. The method includes: A communication apparatus generates and sends a control message, where the control message indicates one or more of the following: whether frequency band stitching is enabled, a quantity of PPDUs participating in current frequency band stitching, whether a synchronization field is used for frequency band stitching, a segment used for sensing in a sensing field of a PPDU, or a UWB channel index corresponding to a segment used for sensing.

For an existing scheduling manner of frequency band stitching, only a basic scheduling framework of frequency band stitching is provided, and there is no specific scheduling information. In this application, specific content of the control message is designed for improving and supporting frequency band stitching, thereby improving sensing performance.

According to a fourteenth aspect, this application provides an information exchange method. The method includes: A communication apparatus receives and parses a control message, where the control message indicates one or more of the following: whether frequency band stitching is enabled, a quantity of PPDUs participating in current frequency band stitching, whether a synchronization field is used for frequency band stitching, a segment used for sensing in a sensing field of a PPDU, or a UWB channel index corresponding to a segment used for sensing.

According to a fifteenth aspect, this application provides a communication apparatus. The communication apparatus includes a processing unit and a transceiver unit. The processing unit is configured to generate a control message, where the control message indicates one or more of the following: whether frequency band stitching is enabled, a quantity of PPDUs participating in current frequency band stitching, whether a synchronization field is used for frequency band stitching, a segment used for sensing in a sensing field of a PPDU, or a UWB channel index corresponding to a segment used for sensing; and the transceiver unit is configured to send the control message.

According to a sixteenth aspect, this application provides a communication apparatus. The communication apparatus includes a processing unit and a transceiver unit. The transceiver unit is configured to receive a control message, where the control message indicates one or more of the following: whether frequency band stitching is enabled, a quantity of PPDUs participating in current frequency band stitching, whether a synchronization field is used for frequency band stitching, a segment used for sensing in a sensing field of a PPDU, or a UWB channel index corresponding to a segment used for sensing; and the processing unit is configured to parse the control message.

With reference to any one of the thirteenth to sixteenth aspects, in a possible implementation, the control message further indicates one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

According to a seventeenth aspect, this application provides an information exchange method. The method includes: A communication apparatus generates and sends a control message, where the control message indicates one or more of the following: whether to enable intra-packet frequency band stitching, a UWB channel index corresponding to a segment used for sensing, or whether a synchronization field is used for frequency band stitching.

In this application, specific content of the control message is designed for improving and supporting frequency band stitching, thereby improving sensing performance.

According to an eighteenth aspect, this application provides an information exchange method. The method includes: A communication apparatus receives and parses a control message, where the control message indicates one or more of the following: whether to enable intra-packet frequency band stitching, a UWB channel index corresponding to a segment used for sensing, or whether a synchronization field is used for frequency band stitching.

According to a nineteenth aspect, this application provides a communication apparatus. The communication apparatus includes a processing unit and a transceiver unit. The processing unit is configured to generate a control message, where the control message indicates one or more of the following: whether to enable intra-packet frequency band stitching, a UWB channel index corresponding to a segment used for sensing, or whether a synchronization field is used for frequency band stitching; and the transceiver unit is configured to send the control message.

According to a twentieth aspect, this application provides a communication apparatus. The communication apparatus includes a processing unit and a transceiver unit. The transceiver unit is configured to receive a control message, where the control message indicates one or more of the following: whether to enable intra-packet frequency band stitching, a UWB channel index corresponding to a segment used for sensing, or whether a synchronization field is used for frequency band stitching; and the processing unit is configured to parse the control message.

With reference to any one of the seventeenth to twentieth aspects, in a possible implementation, the control message further indicates one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

According to a twenty-first aspect, this application provides a communication apparatus. The communication apparatus may include a processor and a memory. Further, the communication apparatus may further include a communication circuit. The memory is configured to store a computer program. The communication circuit is configured to receive/send various types of information. The computer program includes program instructions. When the processor runs the program instructions, the communication apparatus is enabled to perform the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of the first aspect, the second aspect, the fifth aspect, the sixth aspect, the ninth aspect, the tenth aspect, the thirteenth aspect, the fourteenth aspect, the seventeenth aspect, or the eighteenth aspect. The communication circuit may include a transceiver. The transceiver may be a radio frequency module in the communication apparatus, or a combination of a radio frequency module and an antenna, or the communication circuit may include an input/output interface of a chip or a circuit.

According to a twenty-second aspect, this application provides a readable storage medium. The readable storage medium stores program instructions, and when the program instructions are run on a computer, the computer is enabled to perform the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of the first aspect, the second aspect, the fifth aspect, the sixth aspect, the ninth aspect, the tenth aspect, the thirteenth aspect, the fourteenth aspect, the seventeenth aspect, or the eighteenth aspect.

According to a twenty-third aspect, this application provides a program product including program instructions. When the program product runs, the method according to any one of the first aspect, the second aspect, the fifth aspect, the sixth aspect, the ninth aspect, the tenth aspect, the thirteenth aspect, the fourteenth aspect, the seventeenth aspect, the eighteenth aspect, or the possible implementations of the first aspect, the second aspect, the fifth aspect, the sixth aspect, the ninth aspect, the tenth aspect, the thirteenth aspect, the fourteenth aspect, the seventeenth aspect, or the eighteenth aspect is performed.

According to a twenty-fourth aspect, this application provides an apparatus. The apparatus may be implemented in a form of a chip, or may be implemented in a form of a device. The apparatus includes a processor. The processor is configured to read and execute a program stored in a memory, to perform the method provided in one or more of the first aspect, the second aspect, the fifth aspect, the sixth aspect, the ninth aspect, the tenth aspect, the thirteenth aspect, the fourteenth aspect, the seventeenth aspect, or the eighteenth aspect; or provided in one or more of any one of the possible implementations of the first aspect, the second aspect, the fifth aspect, the sixth aspect, the ninth aspect, the tenth aspect, the thirteenth aspect, the fourteenth aspect, the seventeenth aspect, or the eighteenth aspect. The apparatus may further include a memory, and the memory is connected to the processor through a circuit. The apparatus may further include a communication interface, and the processor is connected to the communication interface. The communication interface is configured to receive a to-be-processed data packet and/or to-be-processed information. The processor obtains the data packet and/or the information from the communication interface, processes the data packet and/or the information, and outputs a processing result through the communication interface. The communication interface may be an input/output interface.

The processor and the memory may be physically independent units, or the memory may be integrated with the processor.

According to a twenty-fifth aspect, this application provides a communication system. The communication system includes a first communication apparatus and a second communication apparatus. The first communication apparatus is configured to perform the method according to any one of the first aspect, the fifth aspect, the ninth aspect, the thirteenth aspect, the seventeenth aspect, or the possible implementations of the first aspect, the fifth aspect, the ninth aspect, the thirteenth aspect, or the seventeenth aspect. The second communication apparatus is configured to perform the method according to any one of the second aspect, the sixth aspect, the tenth aspect, the fourteenth aspect, the eighteenth aspect, or the possible implementations of the second aspect, the sixth aspect, the tenth aspect, the fourteenth aspect, or the eighteenth aspect.

For the technical effect achieved in the foregoing aspects, refer to each other or refer to beneficial effect in method embodiments described below. Details are not repeated herein.

### BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3a is a diagram of a possible scheduling manner of frequency band stitching according to an embodiment of this application;
FIG. 3b is a diagram of another possible scheduling manner of frequency band stitching according to an embodiment of this application;
FIG. 3c is a diagram of still another possible scheduling manner of frequency band stitching according to an embodiment of this application;
FIG. 4 is a diagram of a PPDU format according to an embodiment of this application;
FIG. 5 is a diagram of a structure of a sensing field according to an embodiment of this application;
FIG. 6 is a schematic flowchart of a PPDU transmission method based on frequency band stitching according to an embodiment of this application;
FIG. 7a is a diagram of distribution of active segments and inactive segments in a sensing field according to an embodiment of this application;
FIG. 7b is a diagram of another distribution of active segments and inactive segments in a sensing field according to an embodiment of this application;
FIG. 8 is a diagram of a size relationship between an active segment and an inactive segment that have different time lengths according to an embodiment of this application;
FIG. 9a is a diagram of distribution of sensing segments and inactive segments in a PPDU according to an embodiment of this application;
FIG. 9b is a diagram of another distribution of sensing segments and inactive segments in a PPDU according to an embodiment of this application;
FIG. 10a is a diagram of an out-of-sequence channel according to an embodiment of this application;
FIG. 10b is a diagram of an in-sequence channel according to an embodiment of this application;
FIG. 11 is another schematic flowchart of a PPDU transmission method based on frequency band stitching according to an embodiment of this application;
FIG. 12 is a diagram of a time gap in a PPDU according to an embodiment of this application;
FIG. 13 is another diagram of a time gap in a PPDU according to an embodiment of this application;
FIG. 14 is still another schematic flowchart of a PPDU transmission method based on frequency band stitching according to an embodiment of this application;
FIG. 15 is a diagram of distribution of active symbols and inactive symbols in a sensing segment according to an embodiment of this application;
FIG. 16 is a diagram of distribution of active symbols and inactive symbols in a synchronization field according to an embodiment of this application;
FIG. 17 is a diagram of a structure of a communication apparatus according to an embodiment of this application;
FIG. 18 is a diagram of another structure of a communication apparatus according to an embodiment of this application; and
FIG. 19 is a diagram of still another structure of a communication apparatus according to an embodiment of this application.

### DESCRIPTION OF EMBODIMENTS

The following clearly and completely describes technical solutions in embodiments of this application with reference to the accompanying drawings in embodiments of this application.

In the descriptions of this application, words such as "first" and "second" are merely used to distinguish between different objects, and do not limit quantities and execution sequences. In addition, the words such as "first" and "second" do not indicate a definite difference. In addition, terms "include", "have", and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item)" means one or more, "a plurality of" means two or more, and "at least two (items)" means two, three, or more. In addition, the term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "One or more of the following items (pieces)" or a similar expression thereof means any combination of these items. For example, one or more of the following items (pieces): a, b, or c, may indicate a, b, c, "a and b", "a and c", "b and c", or "a and b and c".

In this application, the term "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In the description of this application, both "when" and "if" mean that an apparatus performs corresponding processing in an objective situation, are not intended to limit time, do not require the apparatus to necessarily have a determining action during implementation, and do not mean another limitation.

In this application, an element represented in a singular form is intended to represent "one or more", but does not represent "one and only one", unless otherwise specified.

In embodiments of this application, determining B based on A does not mean that B is determined only based on A, and B may alternatively be determined based on A and/or other information.

Technical solutions provided in this application are applicable to a wireless personal area network (wireless personal area network, WPAN) based on a UWB technology. For example, the method provided in this application is applicable to the IEEE 802.15 series protocols, for example, the 802.15.4a protocol, the 802.15.4z protocol, the 802.15.4ab protocol, or a future generation of UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, an LTE system, a 5th generation (5th-generation, 5G) communication system, a 6th generation (6th-generation, 6G) communication system, or the like.

A UWB technology is a new wireless communication technology. The UWB technology uses nanosecond-level non-sinusoidal wave narrow pulses to transmit data, and modulation is performed on impulses with very steep rise and fall time. Therefore, the UWB technology has a wide spectrum range for transmission, so that a signal has a bandwidth of a gigahertz (GHz) magnitude. A bandwidth used by UWB is usually higher than 500 MHz. A UWB system does not need to generate a sinusoidal carrier signal and may directly transmit an impulse sequence. Therefore, the UWB system has a wide spectrum and low average power. A UWB wireless communication system has advantages of a strong multi-path resolution capability, low power consumption, high confidentiality, and the like. This facilitates coexistence with other systems, thereby improving spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between the ultra-wideband and existing narrowband communication. Therefore, the UWB system and a narrowband (narrowband, NB) communication system can simultaneously operate without interfering with each other. The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes a UWB module, and may further include a narrowband communication module.

Although embodiments of this application are mainly described by using a WPAN as an example, for example, a network used in IEEE 802.15 series standards is used as an example for description. A person skilled in the art easily understands that aspects in this application may be extended to other networks using various standards or protocols, for example, a wireless local area network (wireless local area network, WLAN), Bluetooth (BLUETOOTH), a high performance radio LAN (high performance radio LAN, HIPERLAN) (a wireless standard similar to the IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, 802.15.4ab currently under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, and the like that support the UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not enumerated herein. For still another example, the communication apparatus may include a central control node, for example, a personal area network (personal area network, PAN) or a PAN coordinator. The PAN coordinator or the PAN may be a mobile phone, a vehicle-mounted device, an anchor (Anchor), a tag (tag), a smart home, or the like. For yet another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It can be understood that the foregoing descriptions about the communication apparatus are applicable to the communication apparatus in embodiments of this application.

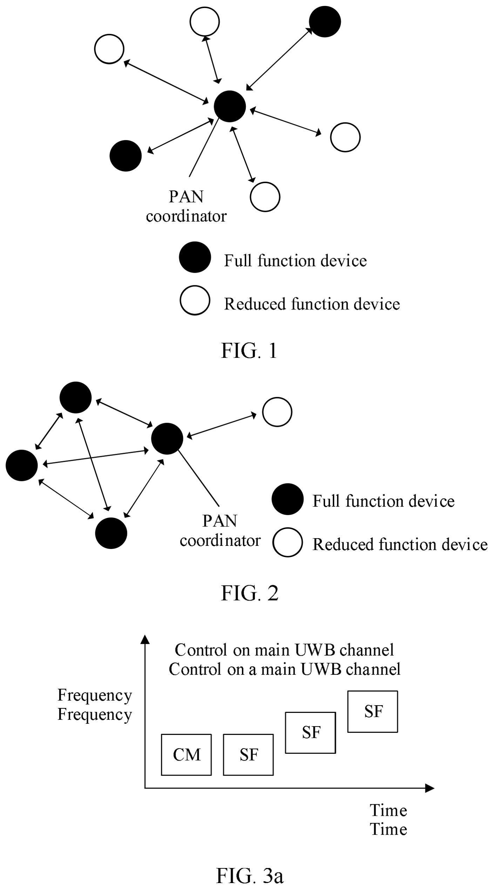

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a peer-to-peer topology structure. In this structure, a central control node (for example, a PAN coordinator in FIG. 2) may perform data communication with one or more other devices, and other different devices may also perform data communication with each other. In FIG. 1 and FIG. 2, both a full function device (full function device) and a reduced function device (reduced function device) may be understood as communication apparatuses shown in this application. The full function device is relative to the reduced function device. For example, the reduced function device cannot be a PAN coordinator (coordinator). For another example, compared with the full function device, the reduced function device may have no coordination capability or have a lower communication rate than the full function device. It may be understood that the PAN coordinator shown in FIG. 2 is merely an example, and each of the other three full function devices shown in FIG. 2 may also be used as a PAN coordinator. Examples are not enumerated herein. It may be further understood that the full function device and the reduced function device in this application are merely examples of the communication apparatus, and any apparatus that can implement a PPDU transmission method based on frequency band stitching provided in this application falls within the protection scope of this application.

Currently, limited by performance of an ADC, a UWB device with low costs and low power consumption is incapable of processing a high-bandwidth signal. Sensing performance is directly proportional to an effective bandwidth. That is, a wider effective bandwidth indicates higher sensing precision. Therefore, to improve sensing performance of the UWB device, a possible solution is implemented through frequency band stitching. Frequency band stitching may be briefly described as follows: A transmit end transmits a plurality of sensing fragments (sensing fragment) by using a plurality of different frequency bands, where different sensing fragments may be transmitted on different frequency bands. A receive end separately receives the sensing fragments (SFs) on these frequency bands, and performs sensing measurement based on the received plurality of sensing fragments (SFs). This is equivalent to stitching the plurality of frequency bands, and performing sensing measurement on a frequency band obtained through stitching. The following describes several possible scheduling manners of frequency band stitching.

FIG. 3a is a diagram of a possible scheduling manner of frequency band stitching according to an embodiment of this application. In FIG. 3a, a horizontal coordinate represents a frequency (frequency), and a vertical coordinate represents time (time). As shown in FIG. 3a, one control message (control message, CM) may be used to schedule a plurality of sensing fragments (sensing fragment, SF), and a transmission frequency band of the control message is the same as a transmission frequency band of a sensing fragment (SF). The transmission frequency band of the control message may be understood as a frequency band or a channel used to transmit the control message (CM), and the transmission frequency band of the sensing fragment (SF) may be understood as a frequency band or a channel used to transmit the sensing fragment (SF). In this application, the "transmission frequency band", the "frequency band", the "channel", and the like may be used interchangeably.

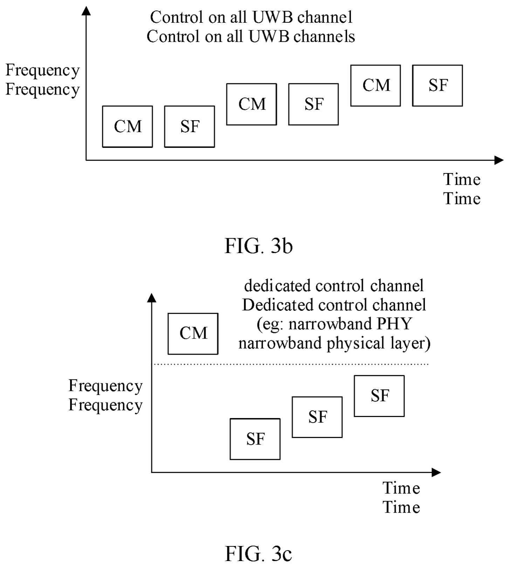

FIG. 3b is a diagram of another possible scheduling manner of frequency band stitching according to an embodiment of this application. In FIG. 3b, a horizontal coordinate represents a frequency (frequency), and a vertical coordinate represents time (time). As shown in FIG. 3b, one control message (CM) may be used to schedule one sensing fragment (SF), and the control message and the sensing fragment (SF) are transmitted by using a same frequency band. FIG. 3c is a diagram of still another possible scheduling manner of frequency band stitching according to an embodiment of this application. In FIG. 3c, a horizontal coordinate represents a frequency (frequency), and a vertical coordinate represents time (time). As shown in FIG. 3c, a control message is transmitted on a dedicated control channel (dedicated control channel), for example, on a narrowband, and the control message may be used to schedule a plurality of sensing fragments (SFs).

In the foregoing three scheduling manners (FIG. 3a to FIG. 3c), transmission frequency bands of sensing fragments (SFs) overlap. The overlapping frequency bands help track a phase during stitching, and improve accuracy of a channel impulse response (channel impulse response, CIR) on an effective channel after stitching. There are three types of overlapping factors between the frequency bands of the sensing fragments (SFs). A first type of overlapping factor is 25% of the frequency band, a second type of overlapping factor is 50% of the frequency band, and a third type of overlapping factor is 75% of the frequency band.

From a time dimension, frequency band stitching may be classified into two types. One type is intra-packet frequency band stitching, that is, different parts in one sensing PPDU are transmitted on different UWB channels. The other type is inter-packet frequency band stitching, that is, a plurality of different sensing PPDUs are transmitted on different UWB channels.

In this application, the "sensing PPDU" may be understood as a PPDU used for sensing measurement, or a PPDU including a sensing field (sensing field). It may be understood that the "PPDU used for sensing measurement" does not mean that the PPDU is used only for sensing measurement. Certainly, the PPDU may be further used to implement another function. This is not limited in this application.

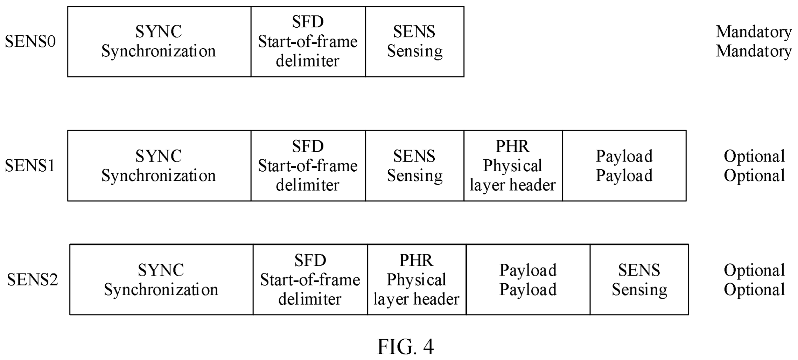

In the discussion of IEEE802.15.4ab, a physical layer protocol data unit (physical layer protocol data unit, PPDU) format used for sensing measurement may be shown in FIG. 4. FIG. 4 is a diagram of a PPDU format according to an embodiment of this application. FIG. 4 shows three possible PPDU formats (PPDU format). The PPDU includes but is not limited to: a synchronization (synchronization, SYNC) field, a start-of-frame delimiter (start-of-frame delimiter, SFD) field, and a sensing (sensing, SENS) field. In a possible implementation, the PPDU may further include one or more of the following: a physical layer header (physical layer header, PHR) or a payload (payload) field. In this application, each field (field) of the PPDU may include one or more symbols (symbols), and symbols (symbols) in the SYNC field, the SFD field, and the SENS field may be generated by using a sequence. For example, the synchronization (SYNC) field may include a plurality of repeated symbols (symbols), and the symbol is generated by using a preamble sequence. A symbol in the synchronization (SYNC) field may be obtained by spreading the preamble sequence. For example, a symbol is obtained by adding several 0 elements after each element in the preamble sequence. For a specific process of generating a (synchronization) symbol by using the preamble sequence, refer to an existing standard, for example, 802.15.4a, 802.15.4z, or 802.15.4ab under discussion. For a manner of obtaining symbols in the SFD field and the SENS field, refer to an existing standard, for example, 802.15.4ab. Details are not described again in this application.

The synchronization (SYNC) field may be used for PPDU detection and synchronization. In some scenarios, some symbols of the synchronization (SYNC) field may be used for PPDU detection and synchronization, and the other symbols may be used for sensing measurement. The sensing field (SENS field) may be used for sensing measurement, and includes one or more sensing segments (SENS segment). Each sensing segment may support 32, 64, or 128 sensing symbols, or may support 16, 256, or 512 sensing symbols. The sensing symbol may be generated by using a predefined sequence (for example, a sequence that is defined in 802.15.4a, 802.15.4z, or 802.15.4ab and that is used for sensing). The PHR carries some physical layer indication information, such as modulation and coding information or PPDU length information, to assist a receive end in correctly demodulating data. The payload field is used to carry data.

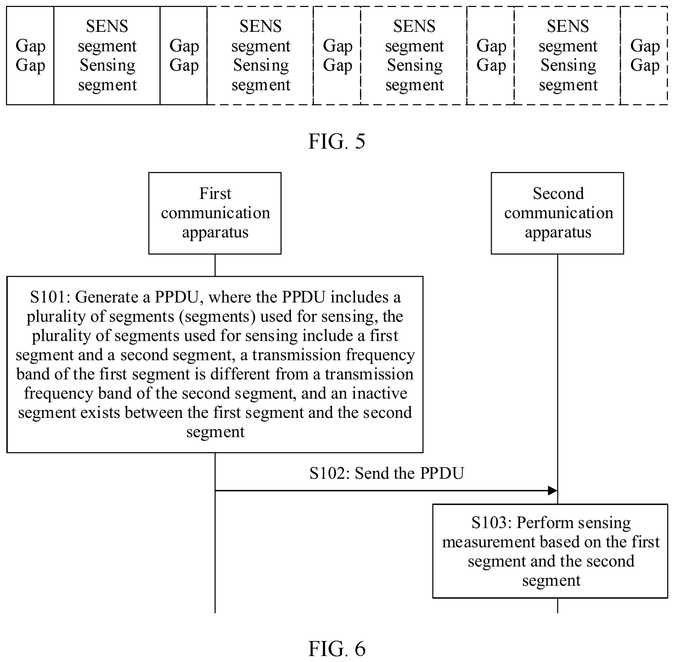

For example, FIG. 5 is a diagram of a structure of a sensing field according to an embodiment of this application. Currently, the sensing field (SENS field) may include one to four sensing segments (SENS segment). Certainly, with evolution of a standard, the sensing field may include more sensing segments (SENS segment). This is not limited in this embodiment of this application. One SENS segment may include one or more sensing symbols (sensing symbol). FIG. 5 shows the structure of the sensing field (SENS field) including at least one sensing segment (SENS segment). A gap (gap) is inserted between adjacent SENS segments. Duration of each gap is one sensing symbol, and is approximately 1 µs (microsecond).

In a possible implementation, for inter-packet frequency band stitching, one sensing fragment (SF) may indicate one or more PPDUs. For intra-packet frequency band stitching, one sensing fragment (SF) may indicate one or more SENS segments in one PPDU. Therefore, for intra-packet frequency band stitching, a transmit end may need to perform frequency switching when sending different SENS segments. Due to hardware limitation of the transmit end (a UWB device), frequency switching time ranges from dozens of microseconds to hundreds of microseconds. It is clearly that, for intra-packet frequency band stitching, an existing gap (approximately 1 µs) cannot meet a frequency switching requirement of the transmit end (the UWB device). In other words, in the existing intra-packet frequency band stitching solution, there is no sufficient time gap between SENS segments to meet the frequency switching requirement. In addition, the foregoing three scheduling manners (that is, the scheduling manners shown in FIG. 3a to FIG. 3c) provide only a basic scheduling framework of frequency band stitching, and do not have specific scheduling information. In other words, content of the control message is not designed.

In view of this, embodiments of this application provide a PPDU transmission method based on frequency band stitching and an apparatus, to improve the frequency band stitching solution, so that there is a sufficient time gap between all parts (for example, the SENS segments) of intra-packet frequency band stitching to complete frequency switching, thereby meeting the frequency switching requirement. In addition, the content of the control message is further designed in this embodiment of this application, to improve and support frequency band stitching.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application. It may be understood that a sequence of the following embodiments does not represent a degree of importance.

The communication apparatus in this application may support not only 802.15 series protocols, such as an 802.15.4ab standard or a next-generation standard of an 802.15.4ab standard, but also other standard protocols (for example, 802.11 series protocols), for example, a plurality of wireless local area network (wireless local area networks, WLAN) standards of an 802.11 family, such as 802.11ax, 802.11ac, 802.11n, 802.11g, 802.11b, 802.11a, 802.11be, a next generation thereof.

In a possible implementation, the method provided in this application may be applied to a sensing scenario of one node and another node, or may be applied to a sensing scenario of one node and a plurality of nodes, or may be applied to a sensing scenario of a plurality of nodes and a plurality of nodes. This is not limited in this application.

### Embodiment 1

Embodiment 1 of this application mainly describes a solution in which an inactive segment (inactive segment) is introduced into a PPDU to increase a time gap between all parts of intra-packet frequency band stitching, to meet a frequency switching requirement and improve frequency band stitching.

FIG. 6 is a schematic flowchart of a PPDU transmission method based on frequency band stitching according to an embodiment of this application. A first communication apparatus and a second communication apparatus in the method may be any two devices that can perform data communication in FIG. 1 or FIG. 2.

As shown in FIG. 6, the PPDU transmission method based on frequency band stitching includes but is not limited to the following steps.

S101: The first communication apparatus generates a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment.

S102: The first communication apparatus sends the PPDU. The first communication apparatus does not transmit a UWB pulse within duration of the inactive segment.

Correspondingly, the second communication apparatus receives the PPDU. The second communication apparatus does not receive the UWB pulse within the duration of the inactive segment.

S103: The second communication apparatus performs sensing measurement based on the first segment and the second segment.

In embodiments of this application, a structure of the PPDU may be shown in FIG. 4, and includes a synchronization field (SYNC field), a start-of-frame delimiter (SFD) field, and a sensing field (SENS field), and may further include a physical layer header (PHR) and a payload (payload) field. Details are not described below. In embodiments of this application, "a plurality of" indicates two or more, for example, two, three, or four.

In a possible implementation, the synchronization field (SYNC field) of the PPDU may participate in sensing measurement, or may not participate in sensing measurement. When the synchronization field of the PPDU does not participate in sensing measurement, the plurality of segments (segments) used for sensing may all belong to the sensing field (SENS field). For example, the plurality of segments used for sensing are a plurality of SENS segments. When the synchronization field of the PPDU participates in sensing measurement, at least one of the plurality of segments (segments) used for sensing belongs to the sensing field (SENS field), or at least one of the plurality of segments used for sensing is the SENS segment, and the at least one of the plurality of segments used for sensing belongs to the synchronization field.

That the synchronization field participates in sensing measurement may be understood as that some (synchronization) symbols in the synchronization field are used for sensing measurement. For example, some symbols in the synchronization field may be used for synchronization, and the other symbols may be used for sensing measurement. Certainly, with evolution of the standard, the symbols in the synchronization field may be further used to implement more functions, and are not limited to implementing synchronization and sensing measurement. For example, the symbols in the synchronization field may be divided into three parts. One part is used for synchronization, another part is used for sensing measurement, and the remaining part is used for implementing another function. The symbols used for sensing measurement in the synchronization field (positions of these symbols in the synchronization field may be consecutive or may not be consecutive, and this is not limited in this application) may be divided into one or more segments used for sensing, or the synchronization field may be used as a segment used for sensing.

In embodiments of this application, if the synchronization field participates in sensing measurement, for ease of description, the symbols used for sensing measurement in the synchronization field or the synchronization field is used as a segment used for sensing.

In a possible implementation, the plurality of segments (segments) used for sensing may include the first segment (segment) and the second segment (segment), and certainly may further include more segments (segments). For ease of description, only the first segment and the second segment are used as an example for description herein. A transmission frequency band of the first segment is different from a transmission frequency band of the second segment, and an inactive segment (inactive segment) exists between the first segment and the second segment. The inactive segment also belongs to the PPDU. The transmission frequency band of the first segment may be understood as a frequency band or a UWB channel used to transmit the first segment, and the transmission frequency band of the second segment may be understood as a frequency band or a UWB channel used to transmit the second segment. That the transmission frequency band of the first segment is different from the transmission frequency band of the second segment may be understood as that the transmission frequency band of the first segment does not completely overlap the transmission frequency band of the second segment. In other words, the transmission frequency band of the first segment partially overlaps the transmission frequency band of the second segment, or the transmission frequency band of the first segment does not overlap the transmission frequency band of the second segment (an overlapping factor is 0). That the transmission frequency band of the first segment is different from the transmission frequency band of the second segment may also be understood as that the first segment and the second segment belong to different sensing fragments (SFs).

The following describes the plurality of segments used for sensing in this embodiment of this application in different cases.

### Implementation 1

The inactive segment belongs to the plurality of segments used for sensing. In other words, some SENS segments (for example, at least one SENS segment) in the sensing field are inactive segments.

Therefore, the SENS segments in the sensing field (SENS field) may be classified into two types: an active segment (active segment) and an inactive segment (inactive segment). A transmit end (for example, the first communication apparatus) normally transmits a sensing symbol (or the UWB pulse) in the active segment, but does not transmit the sensing symbol (or the UWB pulse) in the inactive segment. In other words, a structure of the sensing field in the existing PPDU is not changed, and one or more SENS segments are still included. A difference lies in that the transmit end (for example, the first communication apparatus) does not transmit the sensing symbol (or the UWB pulse) in one or more SENS segments (namely, inactive segments), and normally transmits the sensing symbol (or the UWB pulse) in another SENS segment (that is, the active segment). For example, different active segments may be transmitted on different frequency bands. The inactive segment may include a sensing symbol, but does not send the sensing symbol. Certainly, the inactive segment may alternatively not include a symbol and does not transmit a UWB pulse. In some scenarios, when the inactive segment does not include a symbol (symbol), the inactive segment may alternatively be understood as a time gap. This is not limited in this embodiment of this application.

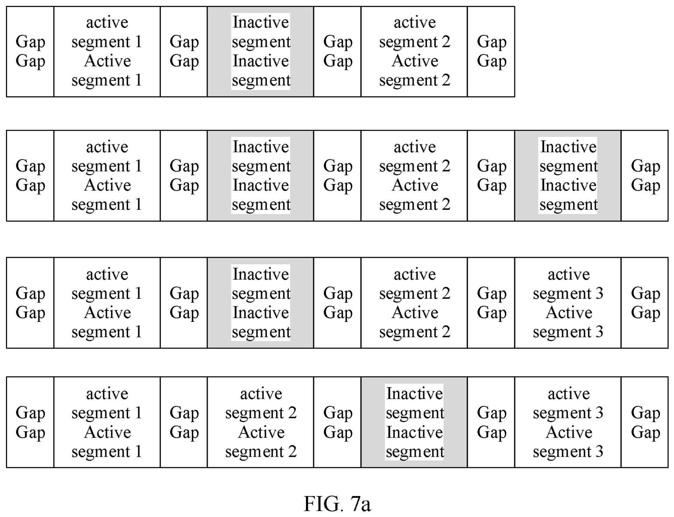

For example, if the synchronization field does not participate in sensing measurement, the plurality of segments used for sensing are all SENS segments, and the first segment and the second segment are active segments. FIG. 7a is a diagram of distribution of the active segments and the inactive segments in the sensing field according to an embodiment of this application. Both the active segment and the inactive segment are SENS segments. FIG. 7a shows several possible cases of distribution of the active segments and the inactive segments in the sensing field when the synchronization field does not participate in sensing measurement. For example, FIG. 7a shows possible cases of distribution when the sensing field includes three SENS segments and four SENS segments, respectively. Certainly, with evolution of the standard, the sensing field may further include more SENS segments. Examples are not enumerated herein. A quantity of SENS segments in the sensing field is not limited in this embodiment of this application. In the first two possible cases of distribution from top to bottom in FIG. 7a, the first segment and the second segment may be respectively an active segment 1 (active segment 1) and an active segment 2 (active segment 2). In the third possible distribution from top to bottom in FIG. 7a, the first segment and the second segment may be respectively any one of the following: the active segment 1 and an active segment 3 (active segment 3), or the active segment 1 and the active segment 2. For example, transmission frequency bands of the active segment 2 and the active segment 3 are the same. In the last possible distribution from top to bottom in FIG. 7a, the first segment and the second segment may be respectively any one of the following: the active segment 1 and the active segment 3, or the active segment 2 and the active segment 3. For example, transmission frequency bands of the active segment 1 and the active segment 2 are the same.

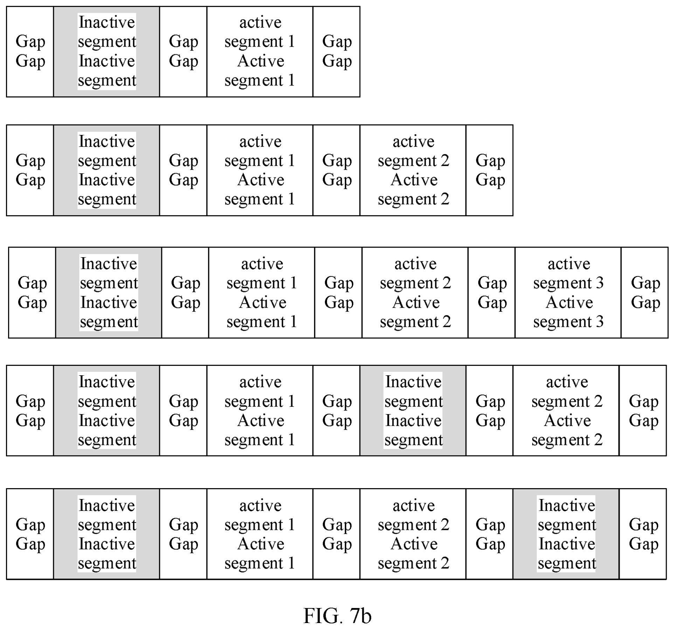

For another example, if the synchronization field participates in sensing measurement, at least one of the plurality of segments used for sensing belongs to the synchronization field, and the others belong to the sensing field. Therefore, one of the first segment and the second segment may belong to the synchronization field. Certainly, both the first segment and the second segment may belong to the sensing field. In addition, the inactive segment belongs to the sensing field. FIG. 7b is a diagram of another distribution of the active segments and the inactive segments in the sensing field according to an embodiment of this application. Both the active segment and the inactive segment are SENS segments. FIG. 7b shows only several cases of distribution of the active segments and the inactive segments in the sensing field that are different from those in FIG. 7a when the synchronization field participates in sensing measurement. In other words, when the synchronization field participates in sensing measurement, distribution of the active segments and the inactive segments in the sensing field may include all possible cases of distribution in FIG. 7a and FIG. 7b. Herein, for brevity, FIG. 7b shows only several possible cases of distribution different from those in FIG. 7a. For example, FIG. 7b shows possible cases of distribution when the sensing field includes two SENS segments, three SENS segments, and four SENS segments, respectively. Certainly, with evolution of the standard, the sensing field may further include more SENS segments. Examples are not enumerated herein. A quantity of SENS segments in the sensing field is not limited in this embodiment of this application. Because the synchronization field participates in sensing measurement, the first segment may be the synchronization field or a symbol (not shown in FIG. 7b) used for sensing measurement in the synchronization field. In this case, the second segment may be an active segment 1 (active segment 1) in FIG. 7b. For the second possible distribution, the third possible distribution, and the fifth possible distribution from top to bottom in FIG. 7b, the second segment may alternatively be an active segment 2 (active segment 2). For the third possible distribution from top to bottom in FIG. 7b, the second segment may alternatively be an active segment 3 (active segment 3). For the fourth possible distribution from top to bottom in FIG. 7b, the first segment may be the synchronization field or the symbol (not shown in FIG. 7b) used for sensing measurement in the synchronization field, and the second segment is the active segment 1 in FIG. 7b; or the first segment is the active segment 1, and the second segment is the active segment 2.

In some scenarios, various cases of distribution shown in FIG. 7b are also applicable to a case in which the synchronization field does not participate in sensing measurement. In this case, a transmission frequency band of the start-of-frame delimiter (SFD) in the PPDU may be different from a transmission frequency band of the active segment 1.

It may be understood that distribution of the active segments and the inactive segments in the sensing field shown in FIG. 7a and FIG. 7b is merely an example, and does not represent all cases of distribution of the segments in the PPDU. Any distribution in which an inactive segment (inactive segment) exists between two segments used for sensing with different transmission frequency bands in the PPDU falls within the protection scope of embodiments of this application.

Time lengths of the segments shown in FIG. 7a and FIG. 7b are not limited in this embodiment of this application. For example, time lengths of the SENS segment (for example, the first segment or the second segment) and the inactive segment may be the same, or certainly may be different. Time lengths of different SENS segments (for example, the first segment and the second segment) may be the same or may be different. Time lengths of different inactive segments may be the same or may be different. For example, all the segments shown in FIG. 7a and FIG. 7b have a same time length. In other words, time lengths of the active segment (for example, the first segment or the second segment) and the inactive segment are the same, time lengths of different active segments (for example, the first segment and the second segment) are the same, and time lengths of different inactive segments are the same.

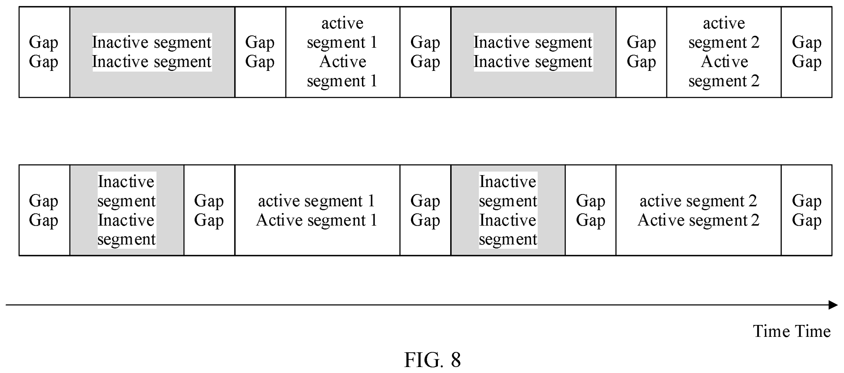

FIG. 8 is a diagram of a size relationship between the active segment and the inactive segment that have different time lengths according to an embodiment of this application. As shown in FIG. 8, the time length of the active segment may be greater than the time length of the inactive segment, or may be less than the time length of the inactive segment. This is not limited in this embodiment of this application. It may be understood that FIG. 8 is merely a diagram of the size relationship between the time length of the active segment and the time length of the inactive segment, and does not limit a quantity, distribution, positions, and the like of the active segment and the inactive segment.

In a possible implementation, the time length of the inactive segment may depend on time required for frequency band switching. For example, a time length of the inactive segment between the first segment and the second segment may be greater than or equal to time required by the transmit end (for example, the first communication apparatus) to switch from the transmission frequency band of the first segment to the transmission frequency band of the second segment.

The gap in FIG. 7a, FIG. 7b, and FIG. 8 may be equal to duration of one sensing symbol, and is approximately 1 µs, or may be greater than duration of one sensing symbol.

### Implementation 2

The inactive segment does not belong to the segment used for sensing. In other words, the inactive segment does not belong to the sensing field (SENS field) (or the inactive segment is not a SENS segment of the sensing field), but the inactive segment belongs to the PPDU. The transmit end (for example, the first communication apparatus) normally transmits a sensing symbol (or a UWB pulse) in the SENS segment, but does not transmit the symbol (or the UWB pulse) in the inactive segment. For example, different SENS segments may be transmitted on different frequency bands. Herein, all SENS segments in the sensing field may be understood as active segments. The inactive segment may include one or more symbols, but does not send the one or more symbols. Certainly, the inactive segment may alternatively not include a symbol and does not transmit a UWB pulse. In some scenarios, when the inactive segment does not include a symbol (symbol), the inactive segment may alternatively be understood as a time gap. This is not limited in this embodiment of this application.

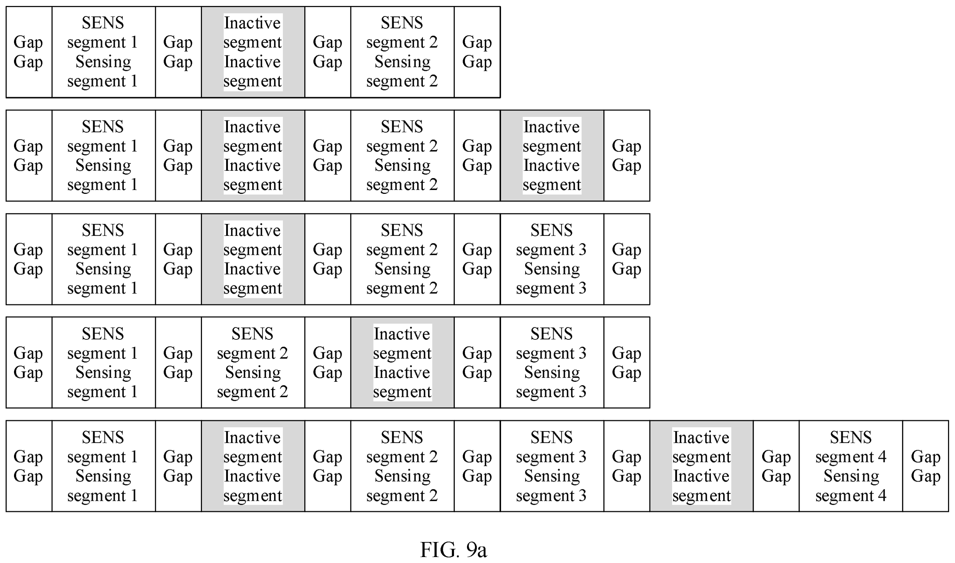

For example, if the synchronization field does not participate in sensing measurement, the plurality of segments used for sensing are all SENS segments. FIG. 9a is a diagram of distribution of sensing segments and inactive segments in a PPDU according to an embodiment of this application. FIG. 9a shows several possible cases of distribution of the sensing segments and the inactive segments in the PPDU when the synchronization field does not participate in sensing measurement. Herein, all SENS segments in the sensing field are active segments. Because the inactive segment does not belong to the segment used for sensing (that is, the inactive segment is not the SENS segment), the plurality of segments used for sensing include at least two segments. For example, FIG. 9a shows possible cases of distribution when the PPDU includes two SENS segments, three SENS segments, and four SENS segments. Certainly, with evolution of the standard, the PPDU may further include more SENS segments. Examples are not enumerated herein. A quantity of SENS segments in the PPDU is not limited in this embodiment of this application. In the first two possible cases of distribution from top to bottom in FIG. 9a, the first segment and the second segment may be respectively a sensing segment 1 (SENS segment 1) and a sensing segment 2 (SENS segment 2). In the third possible distribution from top to bottom in FIG. 9a, the first segment and the second segment may be respectively any one of the following: the sensing segment 1 and a sensing segment 3 (SENS segment 3), or the sensing segment 1 and the sensing segment 2. For example, transmission frequency bands of the sensing segment 2 and the sensing segment 3 are the same. In the fourth possible distribution from top to bottom in FIG. 9a, the first segment and the second segment may be respectively any one of the following: the sensing segment 1 and the sensing segment 3, or the sensing segment 2 and the sensing segment 3. For example, transmission frequency bands of the sensing segment 1 and the sensing segment 2 are the same. In the last possible distribution from top to bottom in FIG. 9a, the first segment and the second segment may be respectively any one of the following: the sensing segment 1 and the sensing segment 2, the sensing segment 1 and the sensing segment 3, the sensing segment 2 and a sensing segment 4, or the sensing segment 3 and a sensing segment 4. For example, transmission frequency bands of the sensing segment 2 (SENS segment 2) and the sensing segment 3 (SENS segment 3) are the same.

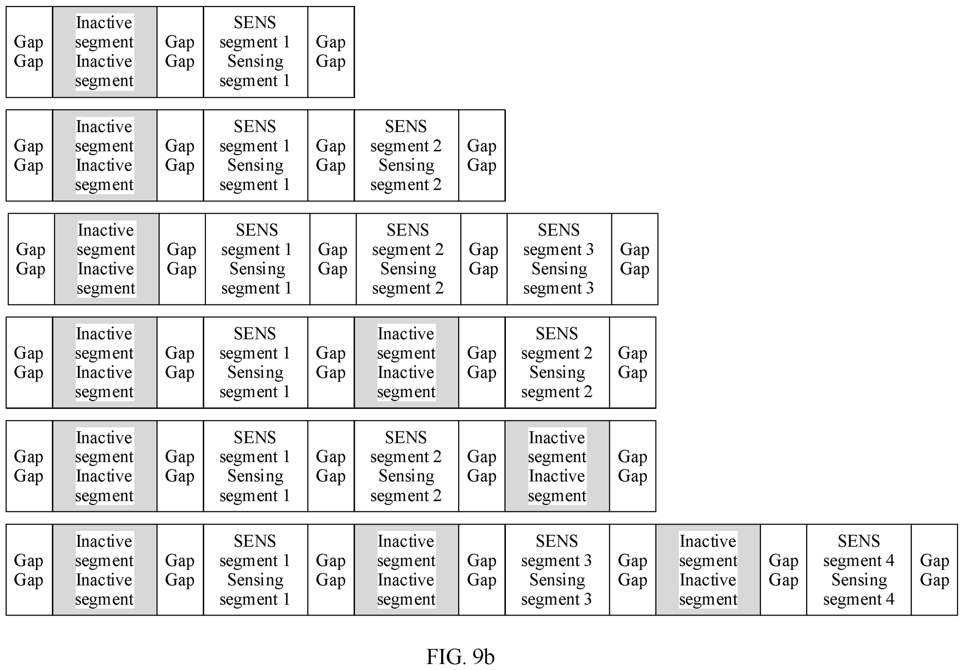

For another example, if the synchronization field participates in sensing measurement, at least one of the plurality of segments used for sensing belongs to the synchronization field, and the others belong to the sensing field. Therefore, one of the first segment and the second segment may belong to the synchronization field. Certainly, both the first segment and the second segment may belong to the sensing field. FIG. 9b is a diagram of another distribution of the sensing segments and the inactive segments in the PPDU according to an embodiment of this application. FIG. 9b shows only several cases of distribution of the sensing segments and the inactive segments that are different from those in FIG. 9a when the synchronization field participates in sensing measurement. Herein, all SENS segments in the sensing field are active segments. In other words, when the synchronization field participates in sensing measurement, distribution of the sensing segments and the inactive segments may include all possible cases of distribution in FIG. 9a and FIG. 9b. Herein, for brevity, FIG. 9b shows only several possible cases of distribution different from those in FIG. 9a. For example, FIG. 9b shows possible cases of distribution when the PPDU includes two SENS segments, three SENS segments, and four SENS segments, respectively. Certainly, with evolution of the standard, the PPDU may further include more SENS segments. Examples are not enumerated herein. A quantity of SENS segments in the PPDU is not limited in this embodiment of this application. Because the synchronization field participates in sensing measurement, the first segment may be the synchronization field or a symbol (not shown in FIG. 9b) used for sensing measurement in the synchronization field. In this case, the second segment may be a sensing segment 1 (SENS segment 1) in FIG. 9b. For the second possible distribution, the third possible distribution, the fifth possible distribution, and the sixth possible distribution from top to bottom in FIG. 9b, the second segment may alternatively be a sensing segment 2 (SENS segment 2). For the third possible distribution and the sixth possible distribution from top to bottom in FIG. 9b, the second segment may alternatively be a sensing segment 3 (SENS segment 3). For the fourth possible distribution from top to bottom in FIG. 9b, the first segment may be the synchronization field or the symbol (not shown in FIG. 9b) used for sensing measurement in the synchronization field, and the second segment is the sensing segment 1 in FIG. 9b; or the first segment is the sensing segment 1, and the second segment is the sensing segment 2. For the last possible distribution from top to bottom in FIG. 9b, the first segment may alternatively be any one of the sensing segment 1, the sensing segment 2, and the sensing segment 3, and the second segment is a sensing segment 4.

In some scenarios, various cases of distribution shown in FIG. 9b are also applicable to a case in which the synchronization field does not participate in sensing measurement. In this case, a transmission frequency band of the start-of-frame delimiter (SFD) in the PPDU may be different from a transmission frequency band of the sensing segment 1.

It may be understood that distribution of the SENS segments and the inactive segments in the PPDU shown in FIG. 9a and FIG. 9b is merely an example, and does not represent all cases of distribution of the segments in the PPDU. Any distribution in which an inactive segment exists between two segments used for sensing with different transmission frequency bands in the PPDU falls within the protection scope of embodiments of this application.

Time lengths of the segments shown in FIG. 9a and FIG. 9b are not limited in this embodiment of this application. For example, time lengths of the SENS segment (for example, the first segment or the second segment) and the inactive segment may be the same, or certainly may be different. Time lengths of different SENS segments (for example, the first segment and the second segment) may be the same or may be different. Time lengths of different inactive segments may be the same or may be different.

In a possible implementation, the time length of the inactive segment may depend on time required for frequency band switching. For example, a time length of the inactive segment between the first segment and the second segment may be greater than or equal to time required by the transmit end (for example, the first communication apparatus) to switch from the transmission frequency band of the first segment to the transmission frequency band of the second segment.

The gap in FIG. 9a and FIG. 9b may be equal to duration of one sensing symbol, and is approximately 1 µs, or may be greater than duration of one sensing symbol.

Regardless of whether the inactive segment belongs to the plurality of segments used for sensing, that the first communication apparatus sends the PPDU includes: The first communication apparatus sends the UWB pulse within duration of the first segment and the second segment, and does not send the UWB pulse within duration of the inactive segment. It may be understood that if the inactive segment does not belong to the plurality of segments used for sensing, the first communication apparatus may send the UWB pulse within duration of the plurality of segments used for sensing. If the inactive segment belongs to the plurality of segments used for sensing, the first communication apparatus may send the UWB pulse within duration of all active segments (which are segments other than the inactive segment in the plurality of segments used for sensing). The inactive segment may be used for frequency switching or frequency band adjustment. In other words, the first communication apparatus may perform frequency band adjustment or frequency switching within the duration of the inactive segment. For example, the first communication apparatus switches from the transmission frequency band of the first segment to the transmission frequency band of the second segment within the duration of the inactive segment.

Correspondingly, that the second communication apparatus receives the PPDU includes: The second communication apparatus receives the UWB pulse within the duration of the first segment and the second segment. Because the first communication apparatus does not send the UWB pulse within the duration of the inactive segment, the second communication apparatus does not receive the UWB pulse within the duration of the inactive segment. For a receive end (for example, the second communication apparatus), the second communication apparatus may perform frequency band adjustment or frequency switching within the duration of the inactive segment. For example, the second communication apparatus switches from the transmission frequency band of the first segment to the transmission frequency band of the second segment within the duration of the inactive segment, so that the second communication apparatus receives the second segment on the transmission frequency band of the second segment after receiving the first segment. Then, the second communication apparatus may perform sensing measurement based on at least one of the first segment and the second segment. It may be understood that if the inactive segment does not belong to the plurality of segments used for sensing, to improve sensing performance, the second communication apparatus may alternatively perform sensing measurement based on the plurality of segments used for sensing. If the inactive segment belongs to the plurality of segments used for sensing, the second communication apparatus may perform sensing measurement based on a segment other than the inactive segment in the plurality of segments used for sensing.

In this embodiment of this application, the inactive segment (inactive segment) is introduced into the PPDU, and the transmit end (for example, the first communication apparatus) is constrained not to transmit the UWB pulse in the inactive segment, to increase a time gap between all parts (the SENS segments) of intra-packet frequency band stitching, meet a frequency switching requirement, and improve a frequency band stitching solution.

In a possible implementation, before step S101, the transmit end and the receive end may align scheduling information related to frequency band stitching. The PPDU transmission method based on frequency band stitching further includes: The first communication apparatus sends a control message, where the control message indicates one or more of the following: whether frequency band stitching is enabled, a quantity of PPDUs participating in current frequency band stitching, whether the synchronization field is used for frequency band stitching, the segment used for sensing in the sensing field of the PPDU, or a UWB channel index corresponding to a segment used for sensing. Correspondingly, the second communication apparatus receives the control message.

For example, the control message may include but is not limited to one or more pieces of content in the following Table 1.

**Table 1**

| Field (field) | Description (description) |
|---|---|
| Frequency Stitching Control (frequency stitching control) | Whether to enable frequency band stitching |
| Frequency Stitching Scheduling (frequency stitching scheduling) | See the following Table 2. |

In this embodiment of this application, the frequency stitching control field indicates to enable frequency band stitching. In Table 1, a length of the frequency stitching control field may be 1 bit (bit), and a length of the frequency stitching scheduling field may be a variable (Variable) length. A length, a name, a specific indication manner, and the like of each field in Table 1 are not limited in this embodiment of this application. The frequency stitching scheduling field in Table 1 may include one or more pieces of content in the following Table 2.

**Table 2**

| Subfield (subfield) | Description (description) |
|---|---|
| Packet Number (packet number) | Quantity of PPDUs participating in current frequency band stitching |
| SYNC Usage Indication (synchronization usage indication) | Whether a synchronization field in each PPDU is used for frequency band stitching |
| Segment Bitmap (segment bitmap) | Active segment and inactive segment in each PPDU |
| Channel Index (channel index) | Indicates a UWB channel index corresponding to the active segment in each PPDU. If the synchronization field is used for frequency band stitching, a UWB channel index corresponding to the synchronization field is further indicated. |

In Table 2, a length of Packet Number Subfield may be 5 bits, a length of SYNC Usage IndicationSubfield may be 1 bit*Packet Number, a length of Segment Bitmap may be 4 bits*Packet Number, and a length of Channel Index Subfield may be 4 bits*m. If the synchronization field is used for frequency band stitching, m indicates a quantity of active segments in each PPDU plus 1, that is, (active segment Number+1). If the synchronization field is used for frequency band stitching, m indicates a quantity of active segments in each PPDU. A length, a name, a specific indication manner, and the like of each subfield in Table 2 are not limited in this embodiment of this application.

In this application, the symbol "*" represents a meaning of multiplication or multiplied by, and details are not described below again.

For example, it is assumed that the quantity of PPDUs participating in current frequency band stitching is 1 (that is, Packet Number=1), and a length of SYNC Usage IndicationSubfield is 1 bit. When the bit is 1, it indicates that the synchronization field is used for frequency band stitching. When the bit is 0, it indicates that the synchronization field is not used for frequency band stitching. It is assumed that the quantity of PPDUs participating in current frequency band stitching is 2 (that is, Packet Number=2), a length of SYNC Usage IndicationSubfield is 2 bits, and one bit corresponds to one PPDU. When a bit is 1, it indicates that a synchronization field in a PPDU corresponding to the bit is used for frequency band stitching. When the bit is 0, it indicates that the synchronization field in the PPDU corresponding to the bit is not used for frequency band stitching. Certainly, it is assumed that the quantity of PPDUs participating in current frequency band stitching is greater than 1, a length of SYNC Usage IndicationSubfield may alternatively be 1 bit. When the bit is 1, it indicates that synchronization fields in all PPDUs participating in current frequency band stitching are used for frequency band stitching. When the bit is 0, it indicates that none of the synchronization fields in all the PPDUs participating in current frequency band stitching is used for frequency band stitching.

In this embodiment of this application, whether 1 indicates that the synchronization field is used for frequency band stitching or 0 indicates that the synchronization field is used for frequency band stitching is not limited. It may be understood that if SYNC Usage IndicationSubfield indicates that the synchronization field is used for frequency band stitching, it indicates that the synchronization field participates in sensing measurement; or if SYNC Usage IndicationSubfield indicates that the synchronization field is not used for frequency band stitching, it indicates that the synchronization field does not participate in sensing measurement.

For another example, when the SENS field includes an inactive segment, a bitmap may indicate a status of each segment. For example, an SENS field in one PPDU includes a maximum of four SENS segments. It is assumed that a quantity of PPDUs participating in current frequency band stitching is 1 (that is, Packet Number=1), a length of Segment Bitmap is 4 bits, and one bit corresponds to one SENS segment. When a bit is 1, it indicates that an SENS segment corresponding to the bit is an active segment. When the bit is 0, it indicates that the SENS segment corresponding to the bit is an inactive segment. It is assumed that a quantity of PPDUs participating in current frequency band stitching is 2 (that is, Packet Number=2), a length of Segment Bitmap is 8 bits, and every 4 bits correspond to one PPDU. An indication manner of every 4 bits is described above, and details are not described herein again. It may be understood that whether 1 indicates the active segment or 0 indicates the active segment is not limited in this embodiment of this application. It may be further understood that, with evolution of the standard, if the SENS field in one PPDU includes a maximum of y SENS segments, a length of Segment Bitmap may be y bits*Packet Number, where y may be a positive integer.

For another example, if the inactive segment does not belong to the segments used for sensing, a length of Segment Bitmap may depend on a total quantity of segments used for sensing and inactive segments, and whether the SYNC field is used for frequency band stitching. For example, a quantity of PPDUs participating in current frequency band stitching is equal to 1 (that is, Packet Number=1). If the SYNC field is used for frequency band stitching, a length of Segment Bitmap may be a total quantity x of segments used for sensing and inactive segments in the PPDU minus 1, that is, (x-1) bits. If the SYNC field is not used for frequency band stitching, a length of Segment Bitmap may be a total quantity x of segments used for sensing and inactive segments in the PPDU, that is, x bits. Regardless of whether the SYNC field is used for frequency band stitching, one bit in Segment Bitmap corresponds to one segment in the PPDU. When a bit is 1, it indicates that a segment corresponding to the bit is an active segment. When the bit is 0, it indicates that the segment corresponding to the bit is an inactive segment. Herein, the active segment is the SENS segment in FIG. 9a or FIG. 9b. It is assumed that a quantity of PPDUs participating in current frequency band stitching is greater than 1 (that is, Packet Number> 1). If the SYNC field is used for frequency band stitching, a length of Segment Bitmap may be a product of Packet Number and a value obtained by a total quantity x of segments used for sensing and inactive segments in each PPDU minus 1, that is, (x-1) bits*Packet Number. If the SYNC field is not used for frequency band stitching, a length of Segment Bitmap may be a product of Packet Number and a total quantity x of segments used for sensing and inactive segments in the PPDU, that is, x bits*Packet Number. If the SYNC field is used for frequency band stitching, every (x-1) bits in Segment Bitmap correspond to one PPDU, and an indication manner of every (x-1) bits is described above. If the SYNC field is not used for frequency band stitching, every x bits in Segment Bitmap correspond to one PPDU, and an indication manner of every x bits is described above. Details are not described herein again. It may be understood that whether 1 indicates the active segment or 0 indicates the active segment is not limited in this embodiment of this application.

In some scenarios, SYNC Usage Indication may be used as a part of Segment Bitmap. For example, SYNC Usage Indication does not exist in Table 2, and a length of Segment Bitmap may be z bits*Packet Number, where z may be equal to 4, y, x, or (x-1) described above. For one PPDU, one of the z bits corresponds to the SYNC field, and indicates whether the SYNC field is used for frequency band stitching. The remaining (z-1) bits may be respectively corresponding to (z-1) segments, and indicate which of the (z-1) segments is an active segment and which is an inactive segment.

In a possible implementation, the control message may further indicate one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

In this embodiment of this application, "the frequency band used for frequency band stitching" or "the UWB channel used for frequency band stitching" may be understood as a transmission frequency band or a UWB channel of a segment used for frequency band stitching, or may be understood as the transmission frequency band or the UWB channel of the SF in FIG. 3a to FIG. 3c. FIG. 7a is used as an example. For the first distribution and the second distribution from top to bottom in FIG. 7a, "the frequency band used for frequency band stitching" includes the transmission frequency bands of the active segment 1 and the active segment 2, and "the UWB channel used for frequency band stitching" includes UWB channels of the active segment 1 and the active segment 2. For the third distribution from top to bottom in FIG. 7a, "the frequency band used for frequency band stitching" includes the transmission frequency band of the active segment 1, and the transmission frequency band of the active segment 2 or the active segment 3, and "the UWB channel used for frequency band stitching" includes the UWB channel of the active segment 1, and the UWB channel of the active segment 2, or a UWB channel of the active segment 3. For the fourth distribution from top to bottom in FIG. 7a, "the frequency band used for frequency band stitching" includes the transmission frequency band of the active segment 1 or the active segment 2, and the transmission frequency band of the active segment 3, and "the UWB channel used for frequency band stitching" includes the UWB channel of the active segment 1 or the active segment 2, and the UWB channel of the active segment 3.

For another example, the control message may include one or more pieces of content in the following Table 3.

**Table 3**

| Field (field) | Description (description) |
|---|---|
| Frequency Stitching Control (frequency stitching control) | Whether to enable frequency band stitching and/or a frequency band stitching manner (for example, in-sequence channel frequency band stitching or out-of-sequence channel frequency band stitching) |
| First SF Channel Index (first sensing fragment channel index) | First UWB channel index used for frequency band stitching |
| Channel Config. Indication (channel configuration indication) | Whether a center frequency of a UWB channel increments or decrements |
| Overlapping Factor (overlapping factor) | Overlapping factor between frequency bands used for frequency band stitching |
| SF Number (sensing fragment number) | Total quantity of currently scheduled frequency bands used for frequency band stitching |
| Channel Grouping Method (channel grouping method) | Frequency band stitching type (for example, intra-packet frequency band stitching, inter-packet frequency band stitching, or intra-packet and inter-packet frequency band stitching) |
| Frequency Stitching Scheduling (frequency stitching scheduling) | See below. |

A length of the frequency stitching control field in Table 3 may be 1 bit, indicating whether to enable frequency band stitching. Alternatively, a length of the frequency stitching control field in Table 3 is 2 bits, indicating whether frequency band stitching is enabled and the frequency band stitching manner when frequency band stitching is enabled. For example, when the frequency stitching control field is 00, it indicates that frequency band stitching is not enabled; when the frequency stitching control field is 01, it indicates in-sequence channel frequency band stitching; when the frequency stitching control field is 10, it indicates out-of-sequence channel frequency band stitching; and when the frequency stitching control field is 11, it indicates reservation. A length of the first sensing fragment channel index field may be 4 bits. The channel configuration indication field may be 1 bit. For example, 0 indicates that the center frequency of the UWB channel increments, and 1 indicates that the center frequency of the UWB channel decrements. The overlapping factor field may be 2 bits. For example, when the overlapping factor field is 00, it indicates a 25% overlap; when the overlapping factor field is 01, it indicates a 50% overlap; when the overlapping factor field is 10, it indicates a 75% overlap; and when the overlapping factor field is 11, it indicates no overlap. A length of the sensing fragment number field may be 4 bits. A length of the channel grouping method field may be 2 bits. For example, when the channel grouping method field is 00, it indicates only intra-packet frequency band stitching; when the channel grouping method field is 01, it indicates only inter-packet frequency band stitching; when the channel grouping method field is 10, it indicates intra-packet and inter-packet frequency band stitching; and when the channel grouping method field is 11, it indicates reservation.

It may be understood that a length, a name, a specific indication manner, and the like of each field in Table 3 are not limited in this embodiment of this application.

It may be further understood that, when Packet Number Subfield in Table 2 indicates that the quantity of PPDUs participating in current frequency band stitching is 1, it may indicate that the frequency band stitching type is only intra-packet frequency band stitching. When Packet Number Subfield in Table 2 indicates that the quantity of PPDUs participating in current frequency band stitching is greater than 1, and Segment Bitmap is 1, it may indicate that the frequency band stitching type is only inter-packet frequency band stitching. When Packet Number Subfield in Table 2 indicates that the quantity of PPDUs participating in current frequency band stitching is greater than 1, and Segment Bitmap is not 1, it may indicate that the frequency band stitching type is intra-packet and inter-packet frequency band stitching. In other words, Table 2 may be understood as implicitly indicating the frequency band stitching type by using Packet Number Subfield and Segment Bitmap. In Table 3, the frequency band stitching type is explicitly indicated by using the Channel Grouping Method field.

In Table 3, the frequency stitching scheduling field may have different content based on different values of the Channel Grouping Method field. For example, when the Channel Grouping Method field indicates only intra-packet frequency band stitching, content of the frequency stitching scheduling field may be shown in the following Table 4a. When the Channel Grouping Method field indicates only inter-packet frequency band stitching, content of the frequency stitching scheduling field may be shown in the following Table 4b. When the Channel Grouping Method field indicates intra-packet and inter-packet frequency band stitching, content of the frequency stitching scheduling field may be shown in the foregoing Table 2.

**Table 4a**

| Subfield (subfield) | Description (description) |
|---|---|
| SYNC Usage Indication (synchronization usage indication) | Whether a synchronization field in a PPDU is used for frequency band stitching |
| Segment Bitmap (segment bitmap) | Active segment and inactive segment in the PPDU |
| Channel Index (channel index) | Indicates a UWB channel index corresponding to the active segment in the PPDU. If the synchronization field is used for frequency band stitching, a UWB channel index corresponding to the synchronization field is further indicated. |

It may be understood that, for a specific implementation of each field in Table 4a, refer to the descriptions when Packet Number is equal to 1 in Table 2. Details are not described herein again.

**Table 4b**

| Subfield (subfield) | Description (description) |
|---|---|
| Packet Number (packet number) | Quantity of PPDUs participating in current frequency band stitching |
| Channel Index (channel index) | Indicates a UWB channel index corresponding to each PPDU. |

It may be understood that a length of Channel Index Subfield in Table 4b may be 4 bits*Packet Number. A length, a name, a specific indication manner, and the like of each subfield in Table 4a and Table 4b are not limited in this embodiment of this application.

In some scenarios, in Table 3, the frequency stitching scheduling field may not include a channel index (Channel Index) subfield, and information indicating a quantity of times of using each UWB channel is added to the frequency stitching scheduling field or Table 3. For example, a channel usage mode (Channel usage mode) field is added to Table 3, to indicate the quantity of times of using each UWB channel. For example, a length of the channel usage mode field is 2 bits. When the channel usage mode field is 00, it indicates that each UWB channel is used once; when the channel usage mode field is 01, it indicates that each UWB channel is used twice; when the channel usage mode field is 10, it indicates that each UWB channel is used three times; and when the channel usage mode field is 11, it indicates that each UWB channel is used four times. In other words, a fixed quantity of segments or PPDUs are transmitted on each UWB channel. Certainly, when each UWB channel is used only once in frequency band stitching, the information indicating the quantity of times of using each UWB channel, for example, the channel usage mode field, may not be added.

This is because when the length of the frequency stitching control field in Table 3 is 2 bits, it indicates the frequency band stitching manner, for example, in-sequence channel frequency band stitching and out-of-sequence channel frequency band stitching, when frequency band stitching is enabled. The transmit end and the receive end can derive the UWB channel index corresponding to the active segment, and the UWB channel index corresponding to the synchronization field when the synchronization field is used for frequency band stitching based on the following information: in-sequence channel frequency band stitching or out-of-sequence channel frequency band stitching, the first UWB channel index used for frequency band stitching, whether the center frequency of the UWB channel increments or decrements, the overlapping factor between frequency bands used for frequency band stitching, the quantity of times of using each UWB channel, and the total quantity of currently scheduled frequency bands used for frequency band stitching.

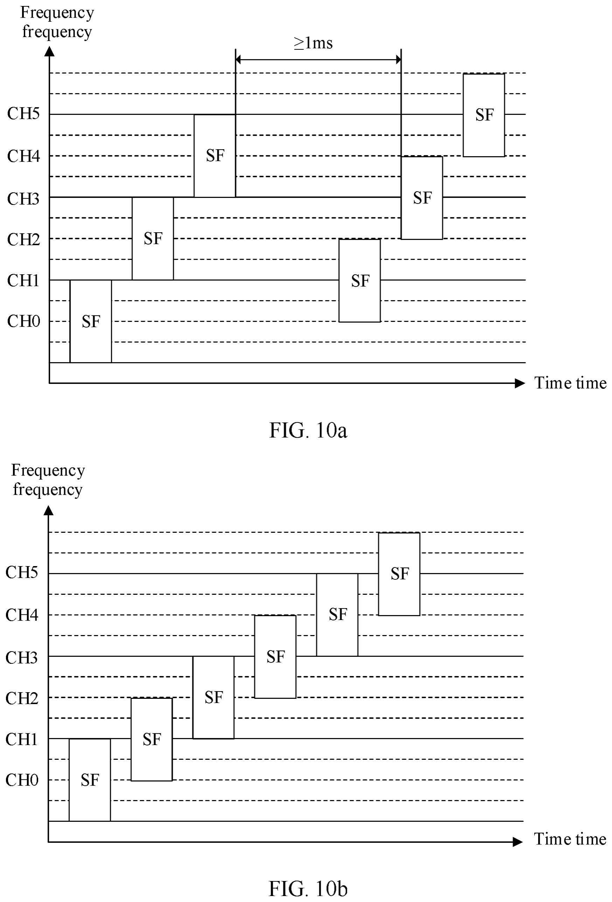

It may be understood that a channel transmission sequence of the frequency band may be classified into two types: an out-of-sequence channel and an in-sequence channel. In frequency band stitching, time required for each channel impulse response (CIR) measurement is less than correlation time of the UWB channel. The correlation time of the UWB channel varies from several nanoseconds to several milliseconds based on different channel environments. The out-of-sequence channel is applicable to a scenario in which the correlation time of the UWB channel is greater than 1 millisecond (ms), for example, a scenario in which a multipath effect is not significant, such as an outdoor scenario or an open area. FIG. 10a is a diagram of the out-of-sequence channel according to an embodiment of this application. As shown in FIG. 10a, a feature of the out-of-sequence channel is that a transmission gap between channels that overlap in frequency domain needs to be greater than 1 ms. According to transmission power requirements of UWB transmission, a maximum average power per millisecond per megahertz of bandwidth is -41.3 dBm. If the transmission gap between the channels that overlap in frequency domain is greater than 1 ms, each sensing fragment (SF) can be transmitted at a maximum allowed power. The in-sequence channel is applicable to a scenario in which the correlation time of the UWB channel is less than 1 millisecond, like an indoor scenario. FIG. 10b is a diagram of the in-sequence channel according to an embodiment of this application. As shown in FIG. 10b, a feature of the in-sequence channel is that different UWB channels are sequentially transmitted, and the total transmission time may be less than 1 ms. When correlation time of the UWB channel is very short, the UWB channel is not applicable to frequency band stitching. In FIG. 10a and FIG. 10b, "CH0" indicates a UWB channel (index) 0, "CH1" indicates a UWB channel (index) 1, "CH2" indicates a UWB channel (index) 2, "CH3" indicates a UWB channel (index) 3, "CH4" indicates a UWB channel (index) 4, and "CH5" indicates a UWB channel (index) 5. It may be understood that a quantity of UWB channels (indexes) in FIG. 10a and FIG. 10b is merely an example. This is not limited in this embodiment of this application.

In this embodiment of this application, the inactive segment (inactive segment) is introduced into the PPDU to increase the time gap between all the parts (SENS segments) of intra-packet frequency band stitching, to meet the frequency switching requirement and improve frequency band stitching. This embodiment of this application further provides the corresponding control message of frequency band stitching, and intra-packet frequency band stitching, inter-packet frequency band stitching, out-of-sequence channel frequency band stitching, and in-sequence channel frequency band stitching are comprehensively considered, to improve and support frequency band stitching.

### Embodiment 2

Embodiment 2 of this application mainly describes a solution in which an extended gap is introduced into a PPDU to increase a time gap between all parts of intra-packet frequency band stitching, to meet a frequency switching requirement and improve frequency band stitching.

Embodiment 2 of this application may be separately implemented, or may be implemented in combination with Embodiment 1. When Embodiment 2 of this application and Embodiment 1 are implemented in combination, for the gap in Embodiment 1, refer to related descriptions in Embodiment 2 of this application.

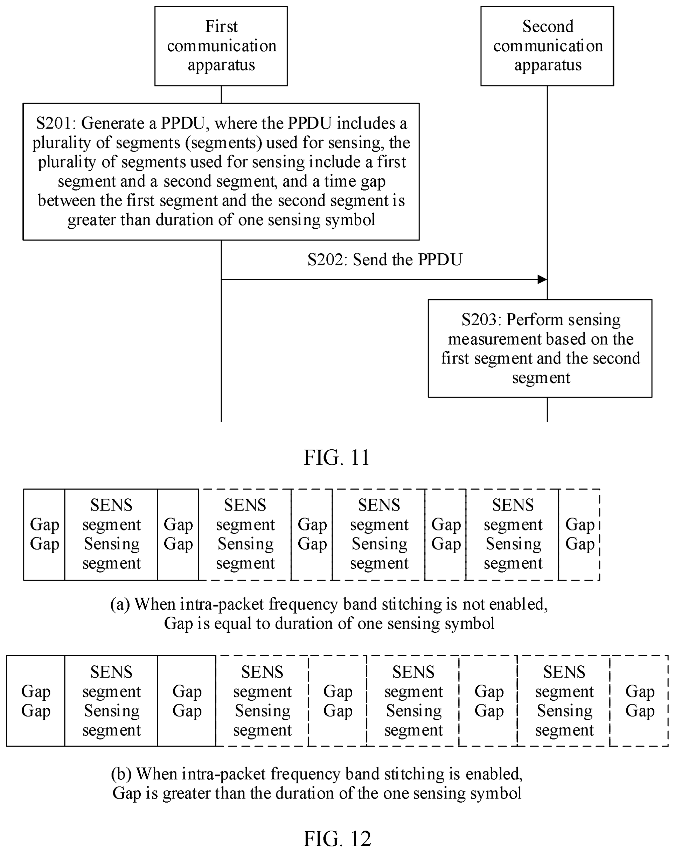

FIG. 11 is another schematic flowchart of a PPDU transmission method based on frequency band stitching according to an embodiment of this application. A first communication apparatus and a second communication apparatus in the method may be any two devices that can perform data communication in FIG. 1 or FIG. 2.

As shown in FIG. 11, the PPDU transmission method based on frequency band stitching includes but is not limited to the following steps.

S201: The first communication apparatus generates a PPDU, where the PPDU includes a plurality of segments (segments) used for sensing, the plurality of segments used for sensing include a first segment and a second segment, and a time gap between the first segment and the second segment is greater than duration of one sensing symbol.

S202: The first communication apparatus sends the PPDU. Correspondingly, the second communication apparatus receives the PPDU.

S203: The second communication apparatus performs sensing measurement based on the first segment and the second segment.

In a possible implementation, a synchronization field (SYNC field) of the PPDU may participate in sensing measurement, or may not participate in sensing measurement. When the synchronization field of the PPDU does not participate in sensing measurement, the plurality of segments (segments) used for sensing may all belong to a sensing field (SENS field). For example, the plurality of segments used for sensing are a plurality of SENS segments. When the synchronization field of the PPDU participates in sensing measurement, at least one of the plurality of segments (segments) used for sensing belongs to a sensing field (SENS field), or at least one of the plurality of segments used for sensing is the SENS segment, and the at least one of the plurality of segments used for sensing belongs to the synchronization field. For a specific meaning of the synchronization field participating in sensing measurement, refer to the descriptions in Embodiment 1. Details are not described herein again.

If the synchronization field participates in sensing measurement, for ease of description, the symbol used for sensing measurement in the synchronization field or the synchronization field is used as a segment used for sensing.

In a possible implementation, before step S201, the PPDU transmission method based on frequency band stitching further includes: The first communication apparatus sends enabling information, where the enabling information indicates whether to enable intra-packet frequency band stitching. Correspondingly, the second communication apparatus receives the enabling information. The plurality of segments (segments) used for sensing may include the first segment (segment) and the second segment (segment), and certainly may further include more segments (segments). For ease of description, only the first segment and the second segment are used as an example for description herein. When the enabling information indicates not to enable intra-packet frequency band stitching, the time gap between the first segment and the second segment is equal to the duration of the sensing symbol, and is approximately 1 µs. It may be understood that, not to enable intra-packet frequency band stitching may indicate that there is no frequency band stitching or only inter-packet frequency band stitching. When the enabling information indicates to enable intra-packet frequency band stitching, the time gap between the first segment and the second segment is greater than the duration of the one sensing symbol. In a possible implementation, the time gap between the first segment and the second segment may depend on time required for frequency band switching. For example, the time gap between the first segment and the second segment may be greater than or equal to time required by a transmit end (for example, the first communication apparatus) to switch from a transmission frequency band of the first segment to a transmission frequency band of the second segment. For example, the time gap between the first segment and the second segment may be equal to duration of 16 sensing symbols, duration of 32 sensing symbols, duration of 64 sensing symbols, duration of 128 sensing symbols, duration of 256 sensing symbols, duration of 512 sensing symbols, or 1 ms. Alternatively, the time gap between the first segment and the second segment may be determined through negotiation between the transmit end and a receive end. The time gap belongs to the PPDU. For example, the time gap belongs to the sensing field (SENS field) of the PPDU.

In this embodiment of this application, duration of the gap is extended to meet a frequency switching requirement. This embodiment of this application mainly focuses on a case of enabling intra-packet frequency band stitching.

In some scenarios, time gaps (gap) in one PPDU are the same. In other words, time gaps between the plurality of segments used for sensing are the same. If intra-packet frequency band stitching is enabled, the time gaps between the plurality of segments used for sensing are all greater than the duration of the sensing symbol. If intra-packet frequency band stitching is not enabled, the time gaps between the plurality of segments used for sensing are all equal to the duration of the sensing symbol. FIG. 12 is a diagram of a time gap in the PPDU according to an embodiment of this application. As shown in FIG. 12, when intra-packet frequency band stitching is not enabled, the gap is duration of one sensing symbol. When intra-packet frequency band stitching is enabled, the gap is greater than duration of one sensing symbol. If the synchronization field participates in sensing measurement, at least one SENS segment is included in FIG. 12. One of the first segment and the second segment may be a SENS segment, and the other segment is the synchronization field. Alternatively, both the first segment and the second segment may be SENS segments. If the synchronization field does not participate in sensing measurement, at least two SENS segments are included in FIG. 12, and the first segment and the second segment may be any two SENS segments in FIG. 12. Time lengths of the SENS segments in FIG. 12 may be the same. For example, the time length of the SENS segment in the existing 802.15.4ab standard is still used. It may be understood that, although the gap is greater than duration of one sensing symbol when intra-packet frequency band stitching is enabled, it does not mean that transmission frequency bands of two segments before and after each gap are different. In other words, transmission frequency bands of the first segment and the second segment may be the same or different. The transmit end (for example, the first communication apparatus) may set, based on an actual situation, a transmission frequency band of a segment used for sensing. It may be further understood that a dashed-line box in FIG. 12 represents content that may exist.

In some other scenarios, time gaps (gaps) in one PPDU may be different. The plurality of segments used for sensing may further include a third segment and a fourth segment. A transmission frequency band of the third segment is the same as a transmission frequency band of the fourth segment, but the transmission frequency band of the first segment is different from the transmission frequency band of the second segment. A time gap between the third segment and the fourth segment is different from the time gap between the first segment and the second segment. For example, the time gap (gap) between the third segment and the fourth segment is equal to the duration of the sensing symbol. One of the third segment and the fourth segment may be the same as the first segment or the second segment. Certainly, the first segment, the second segment, the third segment, and the fourth segment may be different from each other. In short, a gap between segments on which frequency band switching needs to be performed in the PPDU may be set to be longer, for example, greater than duration of one sensing symbol, and a gap between segments on which frequency band switching does not need to be performed may be set to be shorter, for example, less than or equal to the duration of the sensing symbol. A length of the gap in the PPDU needs to be coordinated and consistent between the transmit end and the receive end. For example, this may be implemented by using Gap bitmap. One bit in Gap bitmap corresponds to one gap, indicating a length of each gap. When a bit in Gap bitmap is 1, it indicates that a gap corresponding to the bit is a common gap, and is equal to the duration of the sensing symbol. When the bit is 0, it indicates that a gap corresponding to the bit is an extended gap, and is equal to duration of n sensing symbols or 1 ms, where n is an integer greater than 1. For example, n is equal to 16, 32, 64, 128, 256, or 512. Whether 0 represents the extended gap or 1 represents the extended gap is not limited in this embodiment of this application.

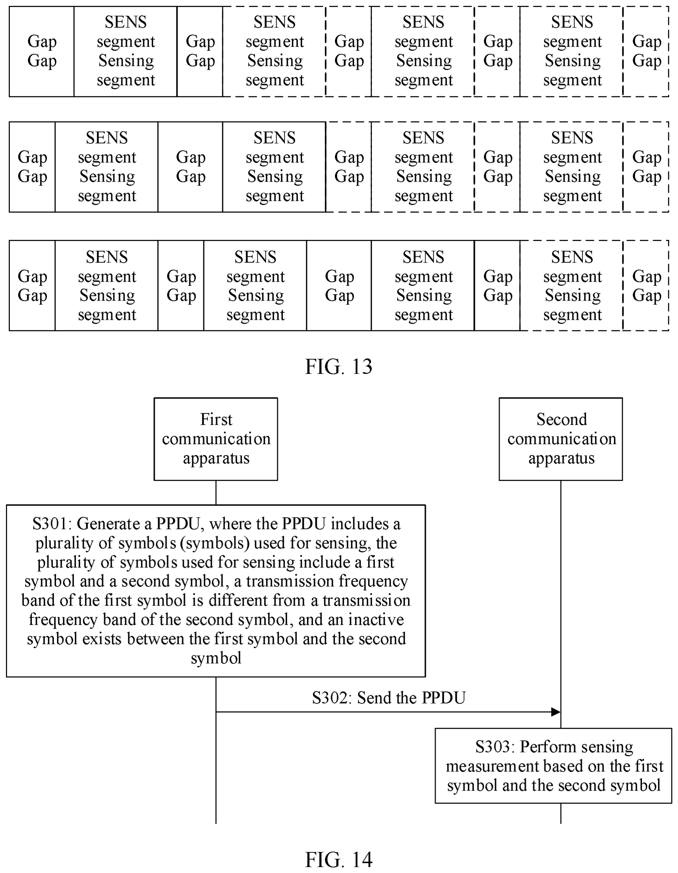

FIG. 13 is another diagram of the time gap in the PPDU according to an embodiment of this application. As shown in FIG. 13, a gap between segments on which frequency band switching needs to be performed is greater than duration of one sensing symbol, and a gap between segments on which frequency band switching does not need to be performed is equal to the duration of the sensing symbol. If the synchronization field participates in sensing measurement, at least one SENS segment is included in FIG. 13. One of the first segment and the second segment may be a SENS segment, and the other segment is the synchronization field. Alternatively, both the first segment and the second segment may be SENS segments. If the synchronization field does not participate in sensing measurement, at least two SENS segments are included in FIG. 13, and the first segment and the second segment may be two SENS segments on which frequency band switching needs to be performed in FIG. 13. Duration of the SENS segments in FIG. 13 may be the same. For example, a time length of the SENS segment in the existing 802.15.4ab standard is still used. It may be understood that a dashed-line box in FIG. 13 represents content that may exist.

In a possible implementation, that the first communication apparatus sends the PPDU includes: The first communication apparatus transmits a UWB pulse within duration of the plurality of segments used for sensing (for example, the first segment and the second segment). Correspondingly, that the second communication apparatus receives the PPDU includes: The second communication apparatus receives the UWB pulse within the duration of the plurality of segments used for sensing (for example, the first segment and the second segment). Then, the second communication apparatus may perform sensing measurement based on at least one of the first segment and the second segment. Certainly, to improve sensing performance, the second communication apparatus may alternatively perform sensing measurement based on the plurality of segments used for sensing.

In this embodiment of this application, the extended gap is introduced into the PPDU to increase the time gap between all parts of intra-packet frequency band stitching, to meet the frequency switching requirement and improve the frequency band stitching solution.

In a possible implementation, before step S201, the transmit end and the receive end may align scheduling information related to frequency band stitching. The PPDU transmission method based on frequency band stitching further includes: The first communication apparatus sends a control message, where the control message indicates one or more of the following: a UWB channel index corresponding to a segment used for sensing, or whether the synchronization field is used for frequency band stitching. In some scenarios, the enabling information is also content in the control message. Correspondingly, the second communication apparatus receives the control message.

For example, the control message may include but is not limited to one or more pieces of content in the following Table 5.

**Table 5**

| Field (field) | Description (description) |
|---|---|
| Frequency Stitching Control (frequency stitching control) | Whether to enable intra-packet frequency band stitching |
| Frequency Stitching Scheduling (frequency stitching scheduling) | See the following Table 6. |

In this embodiment of this application, the frequency stitching control field indicates to enable frequency band stitching. In Table 5, a length of the frequency stitching control field may be 1 bit (bit), and a length of the frequency stitching scheduling field may be a variable (Variable) length. A length, a name, a specific indication manner, and the like of each field in Table 5 are not limited in this embodiment of this application. The frequency stitching scheduling field in Table 5 may include one or more pieces of content in the following Table 6.

**Table 6**

| Subfield (subfield) | Description (description) |
|---|---|
| SYNC Usage Indication (synchronization usage indication) | Whether the synchronization field is used for frequency band stitching |
| Channel Index (channel index) | Indicates a UWB channel index corresponding to each segment used for sensing |

In Table 6, a length of SYNC Usage IndicationSubfield may be 1 bit, and a length of Channel Index Subfield may be 4 bits*(a quantity of segments used for sensing). A length, a name, a specific indication manner, and the like of each subfield in Table 6 are not limited in this embodiment of this application.

In a possible implementation, the control message may further indicate one or more of the following: a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment. The frequency band stitching manner includes in-sequence channel frequency band stitching and out-of-sequence channel frequency band stitching. The frequency band stitching type includes one or more of the following: intra-packet frequency band stitching, or intra-packet and inter-packet frequency band stitching.

In this embodiment of this application, for the meaning of "a frequency band used for frequency band stitching" or "a UWB channel used for frequency band stitching", refer to corresponding descriptions in Embodiment 1. Details are not described herein again.

For another example, the control message may include one or more pieces of content in the following Table 7.

**Table 7**

| Field (field) | Description (description) |
|---|---|
| Frequency Stitching Control (frequency stitching control) | Whether to enable frequency band stitching and/or a frequency band stitching manner (for example, in-sequence channel frequency band stitching or out-of-sequence channel frequency band stitching) |
| First SF Channel Index (first sensing fragment channel index) | First UWB channel index used for frequency band stitching |
| Channel Config. Indication (channel configuration indication) | Whether a center frequency of a UWB channel increments or decrements |
| Overlapping Factor (overlapping factor) | Overlapping factor between frequency bands used for frequency band stitching |
| SF Number (sensing fragment number) | Total quantity of currently scheduled frequency bands used for frequency band stitching |
| Channel Grouping Method (channel grouping method) | Frequency band stitching type (for example, intra-packet frequency band stitching, or intra-packet and inter-packet frequency band stitching) |
| Gap size (gap size) | Time gap between segments (for example, the first segment and the second segment) used for sensing |
| Frequency Stitching Scheduling (frequency stitching scheduling) | See the following Table 8. |

**Table 8**

| Subfield (subfield) | Description (description) |
|---|---|
| Packet Number (packet number) | Quantity of PPDUs participating in current frequency band stitching |
| SYNC Usage Indication (synchronization usage indication) | Whether a synchronization field in each PPDU is used for frequency band stitching |
| Channel Index (channel index) | Indicates a UWB channel index corresponding to each segment used for sensing in a PPDU |

For a length, an indication manner, and the like of each field in Table 7, refer to the descriptions of the corresponding field in Table 3 in Embodiment 1. Details are not described herein again. A difference between Table 7 and Table 3 lies in that, in this embodiment of this application, there are two frequency band stitching types, which may be indicated by using one bit. For example, 0 indicates only intra-packet frequency band stitching, and 1 indicates intra-packet and inter-packet frequency band stitching. In addition, a length of Gap size field in Table 7 may be 2 bits, and may indicate a plurality of candidate time gaps. For example, when Gap size field is 00, it indicates duration of one sensing symbol; when Gap size field is 01, it indicates duration of 64 sensing symbols; when Gap size field is 10, it indicates duration of 128 sensing symbols; and when Gap size field is 11, it indicates duration of 256 sensing symbols. It may be understood that a length, a name, a specific indication manner, and the like of each field in Table 7 are not limited in this embodiment of this application.

In some scenarios, in Table 7, the frequency stitching scheduling field may not include Channel Index Subfield, and information indicating a quantity of times of using each UWB channel is added to the frequency stitching scheduling field or Table 7. For example, a channel usage mode field is added to Table 7, to indicate the quantity of times of using each UWB channel. This is because when the length of the frequency stitching control field in Table 7 is 2 bits, it indicates the frequency band stitching manner, for example, in-sequence channel frequency band stitching and out-of-sequence channel frequency band stitching, when frequency band stitching is enabled. The transmit end and the receive end can derive, based on the following information, the UWB channel index corresponding to each segment used for sensing: in-sequence channel frequency band stitching or out-of-sequence channel frequency band stitching, the first UWB channel index used for frequency band stitching, whether the center frequency of the UWB channel increments or decrements, the overlapping factor between frequency bands used for frequency band stitching, the quantity of times of using each UWB channel, and the total quantity of currently scheduled frequency bands used for frequency band stitching. For related descriptions of the in-sequence channel and the out-of-sequence channel, refer to related descriptions in Embodiment 1 (for example, FIG. 10a and FIG. 10b). Details are not described herein again.

In this embodiment of this application, the extended gap is introduced into the PPDU to increase the time gap between all parts of intra-packet frequency band stitching, to meet the frequency switching requirement and improve the frequency band stitching solution. In addition, this embodiment of this application further provides the corresponding control message of frequency band stitching, and intra-packet frequency band stitching, inter-packet frequency band stitching, out-of-sequence channel frequency band stitching, and in-sequence channel frequency band stitching are comprehensively considered, to improve and support frequency band stitching.

### Embodiment 3

Embodiment 3 of this application mainly describes a solution in which an inactive symbol (inactive symbol) is introduced into a PPDU to increase a time gap between all parts of intra-packet frequency band stitching, to meet a frequency switching requirement and improve frequency band stitching.

FIG. 14 is still another schematic flowchart of a PPDU transmission method based on frequency band stitching according to an embodiment of this application. A first communication apparatus and a second communication apparatus in the method may be any two devices that can perform data communication in FIG. 1 or FIG. 2.

As shown in FIG. 14, the PPDU transmission method based on frequency band stitching includes but is not limited to the following steps.

S301: The first communication apparatus generates a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol.

S302: The first communication apparatus sends the PPDU. The first communication apparatus does not transmit a UWB pulse within duration of the inactive symbol.

Correspondingly, the second communication apparatus receives the PPDU. The second communication apparatus does not receive the UWB pulse within the duration of the inactive symbol.

S303: The second communication apparatus performs sensing measurement based on the first symbol and the second symbol.

In a possible implementation, the plurality of symbols (symbols) used for sensing may include the first symbol (symbol) and the second symbol (symbol), and certainly may further include more symbols (symbols). For ease of description, only the first symbol and the second symbol are used as an example for description herein. The transmission frequency band of the first symbol may be different from the transmission frequency band of the second symbol. For the meaning that the transmission frequency bands are different, refer to related descriptions in Embodiment 1. Details are not described herein again. The inactive symbol (inactive symbol) may exist between the first symbol and the second symbol. The inactive symbol does not belong to the symbols used for sensing, but the inactive symbol belongs to the PPDU, and the inactive symbol and the first symbol and/or the second symbol may belong to a same segment. Certainly, the inactive symbol, the first symbol, and the second symbol may belong to different segments.

If a synchronization field (SYNC field) of the PPDU does not participate in sensing measurement, the inactive symbol and the first symbol and/or the second symbol may belong to a same SENS segment. Sensing symbols in the SENS segment may be classified into two types: an active symbol (active symbol) and an inactive symbol (inactive symbol). Both the first symbol and the second symbol are active symbols. Each SENS segment may support 32, 64, or 128 sensing symbols, or may support 16, 256, or 512 sensing symbols. In this embodiment of this application, some symbols in the SENS segment may be set as inactive symbols, and a specific quantity and distribution of inactive symbols may be determined through negotiation between a transmit end and a receive end. The transmit end (for example, the first communication apparatus) normally transmits the UWB pulse in the active symbol, and does not transmit the UWB pulse in the inactive symbol. In this embodiment of this application, both active symbols and inactive symbols may be consecutive.

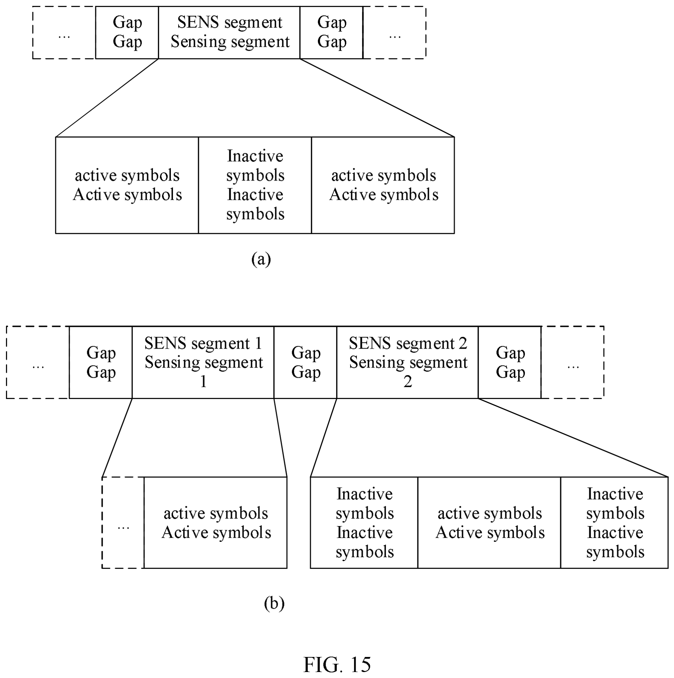

FIG. 15 is a diagram of distribution of the active symbols and the inactive symbols in the sensing segment according to an embodiment of this application. As shown in (a) in FIG. 15, the first symbol, the second symbol, and the inactive symbol belong to a same SENS segment, the first symbol may be any active symbol before the inactive symbol, and the second symbol may be any active symbol after the inactive symbol. As shown in (b) in FIG. 15, the inactive symbol and the first symbol or the second symbol belong to a same SENS segment, the first symbol may be any active symbol in a SENS segment 1, and the second symbol may be any active symbol in a SENS segment 2. In a possible implementation, in (b) in FIG. 15, the inactive symbol and a gap may be used together for frequency switching or frequency band adjustment. Certainly, the inactive symbol may also be independently used for frequency switching or frequency band adjustment. A dashed-line box in FIG. 15 represents content that may exist.

If the synchronization field (SYNC field) of the PPDU participates in sensing measurement, the inactive symbol and the first symbol and/or the second symbol may belong to the synchronization field. When the synchronization field participates in sensing measurement, synchronization symbols in the synchronization field may be classified into an active symbol (active symbol) and an inactive symbol (inactive symbol). Certainly, in this case, the sensing symbols in the SENS segment may also be classified into active symbols and inactive symbols. Specifically, distribution of the active symbols and the inactive symbols in the SENS segment is shown in FIG. 15. Details are not described herein again. Both the first symbol and the second symbol are active symbols. The synchronization field may support 32 or 64 symbols, or may support 16, 128, or 256 symbols. In this embodiment of this application, some symbols in the synchronization field may be set as inactive symbols, and a specific quantity and distribution of inactive symbols may be determined through negotiation between the transmit end and the receive end. The transmit end (for example, the first communication apparatus) normally transmits the UWB pulse in the active symbol, and does not transmit the UWB pulse in the inactive symbol. In this embodiment of this application, both the active symbols and the inactive symbols may be consecutive.

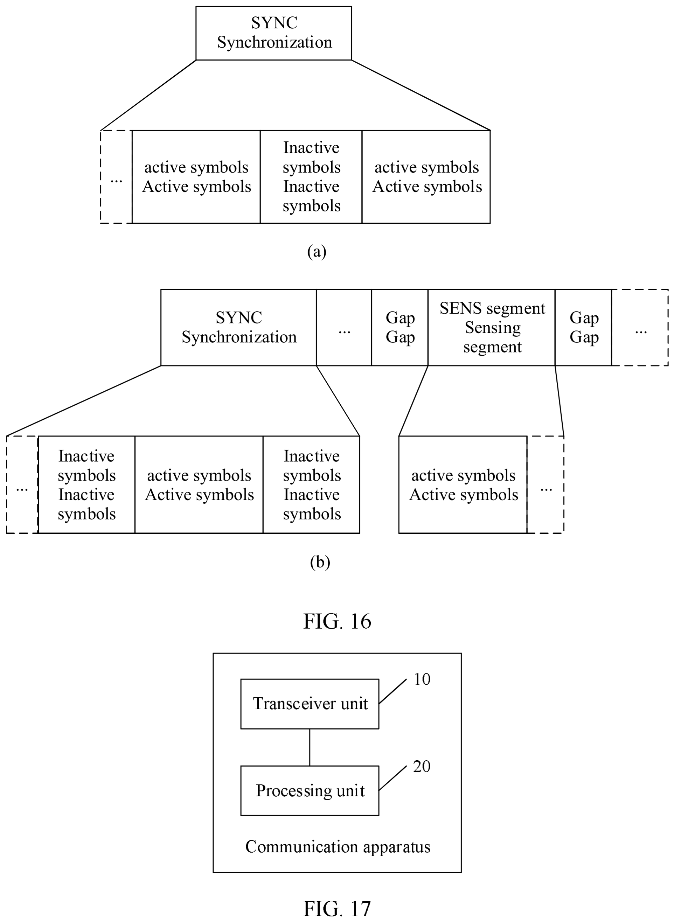

FIG. 16 is a diagram of distribution of the active symbols and the inactive symbols in the synchronization field according to an embodiment of this application. As shown in (a) in FIG. 16, the first symbol, the second symbol, and the inactive symbol belong to the synchronization field. The first symbol may be any active symbol before the inactive symbol in the synchronization field, and the second symbol may be any active symbol after the inactive symbol in the synchronization field. In some scenarios, the PPDU in this embodiment of this application may not include a sensing field, and sensing measurement is performed only by using the synchronization field of the PPDU. In this case, the first symbol, the second symbol, and the inactive symbol all belong to the synchronization field, as shown in (a) in FIG. 16. As shown in (b) in FIG. 16, the inactive symbol and the first symbol or the second symbol belong to the synchronization field, the first symbol may be any active symbol in the synchronization field, and the second symbol may be any active symbol in the SENS segment. A dashed-line box in FIG. 16 represents content that may exist.

It can be learned that a difference between the method (FIG. 14) in this embodiment of this application and the method shown in FIG. 6 (namely, Embodiment 1) lies in that one segment in the method shown in FIG. 6 includes only active symbols or inactive symbols, while one segment in the method (FIG. 14) in this embodiment of this application may include both active symbols and inactive symbols. Certainly, when one segment in the method (FIG. 14) in this embodiment of this application includes only active symbols or inactive symbols, the method in this embodiment of this application is equivalent to the method shown in FIG. 6 (namely, Embodiment 1). Details are not described herein again.

Regardless of whether the synchronization field participates in sensing measurement, that the first communication apparatus sends the PPDU includes: The first communication apparatus sends the UWB pulse within the duration of the plurality of symbols used for sensing, and does not send the UWB pulse within the duration of the inactive symbol. The inactive symbol may be used for frequency switching or frequency band adjustment. In other words, the first communication apparatus may perform frequency band adjustment or frequency switching within the duration of the inactive symbol. For example, the first communication apparatus switches from the transmission frequency band of the first symbol to the transmission frequency band of the second symbol within the duration of the inactive symbol.

Correspondingly, that the second communication apparatus receives the PPDU includes: The first communication apparatus receives the UWB pulse within the duration of the plurality of segments used for sensing. Because the first communication apparatus does not send the UWB pulse within the duration of the inactive symbol, the second communication apparatus does not receive the UWB pulse within the duration of the inactive symbol. For the receive end (for example, the second communication apparatus), the second communication apparatus may perform frequency band adjustment or frequency switching within the duration of the inactive symbol. For example, the second communication apparatus switches from the transmission frequency band of the first symbol to the transmission frequency band of the second symbol within the duration of the inactive symbol, so that the second communication apparatus receives the second symbol on the transmission frequency band of the second symbol after the second communication apparatus receives the first symbol.

In this embodiment of this application, the inactive symbol (inactive symbol) is introduced into the PPDU (for example, a segment of the PPDU), and the transmit end (for example, the first communication apparatus) is constrained not to transmit the UWB pulse in the inactive symbol, to increase a time gap between all parts of intra-packet frequency band stitching, meet the frequency switching requirement, and improve the frequency band stitching solution.

In a possible implementation, before step S301, the transmit end and the receive end may align scheduling information related to frequency band stitching. The PPDU transmission method based on frequency band stitching further includes: The first communication apparatus sends a control message, where the control message indicates one or more of the following: whether frequency band stitching is enabled, a quantity of PPDUs participating in current frequency band stitching, whether the synchronization field is used for frequency band stitching, a quantity and distribution of symbols used for sensing included in the synchronization field, a quantity and distribution of symbols used for sensing in the sensing segment, or a UWB channel index corresponding to the symbol (namely, active symbols) used for sensing. Correspondingly, the second communication apparatus receives the control message.

For example, the control message may include but is not limited to one or more pieces of content in the following Table 9.

**Table 9**

| Field (field) | Description (description) |
|---|---|
| Frequency Stitching Control (frequency stitching control) | Whether to enable frequency band stitching |
| Frequency Stitching Scheduling (frequency stitching scheduling) | See the following Table 10. |

In this embodiment of this application, the frequency stitching control field indicates to enable frequency band stitching. In Table 9, a length of the frequency stitching control field may be 1 bit (bit), and a length of the frequency stitching scheduling field may be a variable (Variable) length. A length, a name, a specific indication manner, and the like of each field in Table 9 are not limited in this embodiment of this application. The frequency stitching scheduling field in Table 9 may include one or more pieces of content in the following Table 10.

**Table 10**

| Subfield (subfield) | Description (description) |
|---|---|
| Packet Number (packet number) | Quantity of PPDUs participating in current frequency band stitching |
| SYNC Usage Indication (synchronization usage indication) | Whether a synchronization field in each PPDU is used for frequency band stitching |
| active symbol in SYNC (active symbol in SYNC) | Quantity and distribution of symbols used for sensing included in a synchronization field of each PPDU |
| active symbol in SENS segment (active symbol in SYNC) | Quantity and distribution of symbols used for sensing in a sensing segment of each PPDU |
| Channel Index (channel index) | Indicates a UWB channel index corresponding to each segment of consecutive active symbols |

A length, a name, a specific indication manner, and the like of each subfield in Table 10 are not limited in this embodiment of this application.

In a possible implementation, the control message may further indicate one or more of the following: a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements. The frequency band stitching manner includes in-sequence channel frequency band stitching and out-of-sequence channel frequency band stitching. The frequency band stitching type includes one or more of the following: intra-packet frequency band stitching, inter-packet frequency band stitching, or intra-packet and inter-packet frequency band stitching.

In this embodiment of this application, for the meaning of "a frequency band used for frequency band stitching" or "a UWB channel used for frequency band stitching", refer to corresponding descriptions in Embodiment 1. Details are not described herein again.

For another example, the control message may include one or more pieces of content in the following Table 11.

**Table 11**

| Field (field) | Description (description) |
|---|---|
| Frequency Stitching Control (frequency stitching control) | Whether to enable frequency band stitching and/or a frequency band stitching manner (for example, in-sequence channel frequency band stitching or out-of-sequence channel frequency band stitching) |
| First SF Channel Index (first sensing fragment channel index) | First UWB channel index used for frequency band stitching |
| Channel Config. Indication (channel configuration indication) | Whether a center frequency of a UWB channel increments or decrements |
| Overlapping Factor (overlapping factor) | Overlapping factor between frequency bands used for frequency band stitching |
| SF Number (sensing fragment number) | Total quantity of currently scheduled frequency bands used for frequency band stitching |
| Channel Grouping Method (channel grouping method) | Frequency band stitching type (for example, intra-packet frequency band stitching, inter-packet frequency band stitching, or intra-packet and inter-packet frequency band stitching) |
| Frequency Stitching Scheduling (frequency stitching scheduling) | See below. |

For a length, an indication manner, and the like of a field other than the frequency stitching scheduling field in Table 11, refer to descriptions of the corresponding field in Table 3 in Embodiment 1. Details are not described herein again. A length, a name, a specific indication manner, and the like of each field in Table 11 are not limited in this embodiment of this application. For related descriptions of the in-sequence channel and the out-of-sequence channel, refer to related descriptions in Embodiment 1 (for example, FIG. 10a and FIG. 10b). Details are not described herein again.

In Table 11, the frequency stitching scheduling field may have different content based on different values of the Channel Grouping Method field. For example, when the Channel Grouping Method field indicates only intra-packet frequency band stitching, content of the frequency stitching scheduling field may be shown in the following Table 12. When the Channel Grouping Method field indicates only inter-packet frequency band stitching, content of the frequency stitching scheduling field may be shown in Table 4b. When the Channel Grouping Method field indicates intra-packet and inter-packet frequency band stitching, content of the frequency stitching scheduling field may be shown in Table 10.

**Table 12**

| Subfield (subfield) | Description (description) |
|---|---|
| SYNC Usage Indication (synchronization usage indication) | Whether a synchronization field in each PPDU is used for frequency band stitching |
| active symbol in SYNC (active symbol in SYNC) | Quantity and distribution of symbols used for sensing included in a synchronization field of each PPDU |
| active symbol in SENS segment (active symbol in SYNC) | Quantity and distribution of symbols used for sensing in a sensing segment of each PPDU |
| Channel Index (channel index) | Indicates a UWB channel index corresponding to each segment of consecutive active symbols |

In some scenarios, in Table 11, the frequency stitching scheduling field may not include a channel index subfield, and information indicating a quantity of times of using each UWB channel is added to the frequency stitching scheduling field or Table 11. For example, a channel usage mode field is added to Table 11, to indicate the quantity of times of using each UWB channel. In this case, it is considered that the UWB channel is used once for each segment of consecutive active symbols in the PPDU. When each UWB channel is used only once in frequency band stitching, the information indicating the quantity of times of using each UWB channel, for example, the channel usage mode field, may not be added.

This is because when the length of the frequency stitching control field in Table 11 is 2 bits, it indicates the frequency band stitching manner, for example, in-sequence channel frequency band stitching and out-of-sequence channel frequency band stitching, when frequency band stitching is enabled. The transmit end and the receive end can derive, based on the following information, the UWB channel index corresponding to each segment of consecutive active symbols: in-sequence channel frequency band stitching or out-of-sequence channel frequency band stitching, the first UWB channel index used for frequency band stitching, whether the center frequency of the UWB channel increments or decrements, the overlapping factor between frequency bands used for frequency band stitching, the quantity of times of using each UWB channel, the total quantity of currently scheduled frequency bands used for frequency band stitching, the quantity and distribution of symbols used for sensing included in the synchronization field of each PPDU, and the quantity and distribution of symbols used for sensing in the sensing segment of each PPDU.

In this embodiment of this application, the inactive symbol (inactive symbol) is introduced into the PPDU (for example, a segment of the PPDU) to increase the time gap between all parts of intra-packet frequency band stitching, to meet the frequency switching requirement and improve frequency band stitching solution. In addition, this embodiment of this application further provides the corresponding control message of frequency band stitching, and intra-packet frequency band stitching, inter-packet frequency band stitching, out-of-sequence channel frequency band stitching, and in-sequence channel frequency band stitching are comprehensively considered, to improve and support frequency band stitching.

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatuses in embodiments of this application with reference to FIG. 17 to FIG. 19.

FIG. 17 is a diagram of a structure of a communication apparatus according to an embodiment of this application. As shown in FIG. 17, the communication apparatus includes a transceiver unit 10 and a processing unit 20.

In some embodiments of this application, the communication apparatus may be the first communication apparatus shown above or a chip in the first communication apparatus. To be specific, the communication apparatus shown in FIG. 17 may be configured to perform steps, functions, or the like performed by the first communication apparatus in the foregoing method embodiments.

In a design, the processing unit 20 is configured to generate a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the transceiver unit 10 is configured to send the PPDU. The communication apparatus does not transmit a UWB pulse within duration of the inactive segment.

In a possible implementation, the transceiver unit 10 is further configured to send a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In this embodiment of this application, for specific descriptions of the plurality of segments used for sensing, the first segment, the second segment, the inactive segment, the control message, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1. Details are not described herein again. For example, the transceiver unit 10 may be configured to perform step S102 shown in FIG. 6, and the processing unit 20 may be configured to perform step S101 shown in FIG. 6.

In another design, the processing unit 20 is configured to generate a PPDU, where the PPDU includes a plurality of segments (segments) used for sensing, the plurality of segments used for sensing include a first segment and a second segment, and a time gap between the first segment and the second segment is greater than duration of one sensing symbol; and the transceiver unit 10 is configured to send the PPDU.

In a possible implementation, the transceiver unit 10 is specifically configured to transmit a UWB pulse within duration of the first segment and the second segment.

In a possible implementation, the transceiver unit 10 is further configured to send enabling information, where the enabling information indicates whether to enable intra-packet frequency band stitching. When the enabling information indicates to enable intra-packet frequency band stitching, the time gap between the first segment and the second segment is greater than the duration of the one sensing symbol.

In a possible implementation, the transceiver unit 10 is further configured to send a control message, where the control message indicates one or more of the following: a UWB channel index corresponding to a segment used for sensing, or whether a synchronization field is used for frequency band stitching.

In this embodiment of this application, for specific descriptions of the plurality of segments used for sensing, the first segment, the second segment, the enabling information, the control message, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2. Details are not described herein again. For example, the transceiver unit 10 may be configured to perform step S202 shown in FIG. 11, and the processing unit 20 may be configured to perform step S201 shown in FIG. 11.

In still another design, the processing unit 20 is configured to generate a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the transceiver unit 10 is configured to send the PPDU. The communication apparatus does not transmit a UWB pulse within duration of the inactive symbol.

In a possible implementation, the transceiver unit 10 is further configured to send a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In this embodiment of this application, for specific descriptions of the plurality of symbols used for sensing, the first symbol, the second symbol, the inactive symbol, the control message, and the like, refer to the method Embodiment 3 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 3. Details are not described herein again. For example, the transceiver unit 10 may be configured to perform step S302 shown in FIG. 14, and the processing unit 20 may be configured to perform step S301 shown in FIG. 14.

Still refer to FIG. 17. In some other embodiments of this application, the communication apparatus may be the second communication apparatus shown above or a chip in the second communication apparatus. To be specific, the communication apparatus shown in FIG. 17 may be configured to perform steps, functions, or the like performed by the second communication apparatus in the foregoing method embodiments.

In a design, the transceiver unit 10 is configured to receive a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the processing unit 20 is configured to perform sensing measurement based on the first segment and the second segment. The communication apparatus does not receive a UWB pulse within duration of the inactive segment.

In a possible implementation, the transceiver unit 10 is further configured to receive a control message, where the control message indicates one or more of the following: whether frequency band stitching is enabled, a quantity of PPDUs participating in current frequency band stitching, whether a synchronization field is used for frequency band stitching, a segment used for sensing in a sensing field of the PPDU, or a UWB channel index corresponding to a segment used for sensing.

In this embodiment of this application, for specific descriptions of the plurality of segments used for sensing, the first segment, the second segment, the inactive segment, the control message, and the like, refer to the method Embodiment 1 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 1. Details are not described herein again. For example, the transceiver unit 10 may be configured to receive the PPDU, and the processing unit 20 may be configured to perform step S103 shown in FIG. 6.

In another design, the transceiver unit 10 is configured to receive a PPDU, where the PPDU includes a plurality of segments (segments) used for sensing, the plurality of segments used for sensing include a first segment and a second segment, and a time gap between the first segment and the second segment is greater than duration of one sensing symbol; and the processing unit 20 is configured to perform sensing measurement based on the first segment and the second segment.

In a possible implementation, the transceiver unit 10 is specifically configured to receive a UWB pulse within duration of the first segment and the second segment.

In a possible implementation, the transceiver unit 10 is further configured to receive enabling information, where the enabling information indicates whether to enable intra-packet frequency band stitching. When the enabling information indicates to enable intra-packet frequency band stitching, the time gap between the first segment and the second segment is greater than the duration of the one sensing symbol.

In a possible implementation, the transceiver unit 10 is further configured to receive a control message, where the control message indicates one or more of the following: a UWB channel index corresponding to a segment used for sensing, or whether a synchronization field is used for frequency band stitching.

In this embodiment of this application, for specific descriptions of the plurality of segments used for sensing, the first segment, the second segment, the enabling information, the control message, and the like, refer to the method Embodiment 2 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 2. Details are not described herein again. For example, the transceiver unit 10 may be configured to receive the PPDU; and the processing unit 20 may be configured to perform step S203 shown in FIG. 11.

In still another design, the transceiver unit 10 is configured to receive a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the processing unit 20 is configured to perform sensing measurement based on the first symbol and the second symbol. The communication apparatus does not receive the UWB pulse within the duration of the inactive symbol.

In a possible implementation, the transceiver unit 10 is further configured to receive a control message, where the control message indicates one or more of the following: whether frequency band stitching is enabled, a quantity of PPDUs participating in current frequency band stitching, whether a synchronization field is used for frequency band stitching, a quantity and distribution of symbols used for sensing included in the synchronization field, a quantity and distribution of symbols used for sensing in a sensing segment, or a UWB channel index corresponding to the symbols used for sensing.

In this embodiment of this application, for specific descriptions of the plurality of symbols used for sensing, the first symbol, the second symbol, the inactive symbol, the control message, and the like, refer to the method Embodiment 3 shown above. Details are not described herein again.

It may be understood that specific descriptions of the transceiver unit and the processing unit shown in this embodiment of this application are merely examples. For specific functions, steps, or the like of the transceiver unit and the processing unit, refer to the foregoing method Embodiment 3. Details are not described herein again. For example, the transceiver unit 10 may be configured to receive the PPDU; and the processing unit 20 may be configured to perform step S303 shown in FIG. 14.

The foregoing describes the communication apparatuses in embodiments of this application. The following describes a possible product form of the communication apparatus. It should be understood that a product in any form that has functions of the communication apparatus in FIG. 17 falls within the protection scope of embodiments of this application. It should be further understood that the following descriptions are merely examples, and the product form of the communication apparatus in embodiments of this application is not limited thereto.

In a possible implementation, in the communication apparatus shown in FIG. 17, the processing unit 20 may be one or more processors, and the transceiver unit 10 may be a transceiver, or the transceiver unit 10 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application. In a process of performing the foregoing method, the process of sending information (for example, sending the PPDU or the control message) in the foregoing method may be understood as a process of the processor outputting the foregoing information. When outputting the information, the processor outputs the information to the transceiver, so that the transceiver transmits the information. After the information is output by the processor, other processing may further need to be performed on the information before the information arrives at the transceiver. Similarly, the process of receiving information (for example, receiving the PPDU or the control message) in the foregoing method may be understood as a process of the processor receiving the information that is input above. When the processor receives the input information, the transceiver receives the information, and inputs the information into the processor. Further, after the transceiver receives the information, other processing may further need to be performed on the information before processed information is input into the processor.

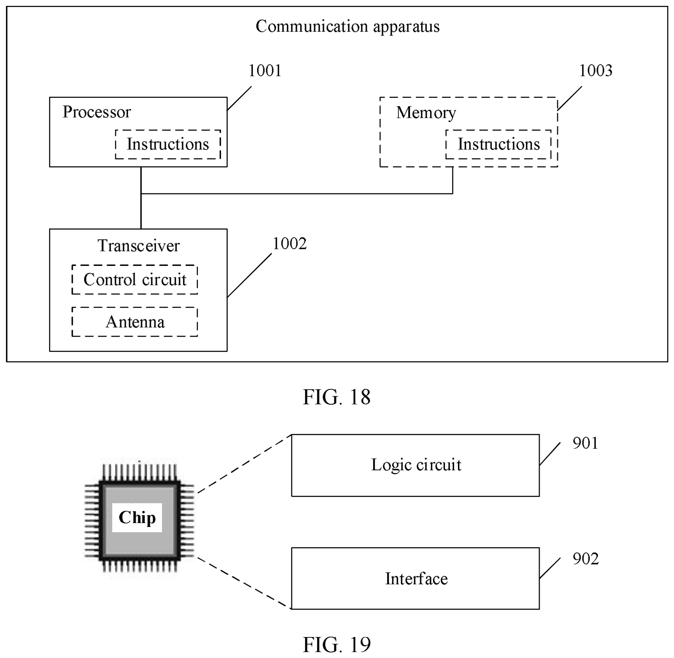

FIG. 18 is a diagram of another structure of a communication apparatus according to an embodiment of this application. The communication apparatus may be a first communication apparatus, a second communication apparatus, or a chip in the first communication apparatus or the second communication apparatus. FIG. 18 shows only main components of the communication apparatus. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method Embodiment 1, the processor 1001 may be configured to perform step S101 in FIG. 6, and/or configured to perform another process of the technology described in this specification; and the transceiver 1002 may be configured to perform step S102 in FIG. 6, and/or configured to perform another process of the technology described in this specification.

For example, when the communication apparatus is configured to perform the steps, methods, or functions performed by the second communication apparatus in the foregoing method Embodiment 1, the processor 1001 may be configured to perform step S103 in FIG. 6, and/or configured to perform another process of the technology described in this specification; and the transceiver 1002 may be configured to receive a PPDU, and/or configured to perform another process of the technology described in this specification.

For example, when the communication apparatus is configured to perform the steps, methods, or functions performed by the first communication apparatus in the foregoing method Embodiment 2, the processor 1001 may be configured to perform step S201 in FIG. 11, and/or configured to perform another process of the technology described in this specification; and the transceiver 1002 may be configured to perform step S202 in FIG. 11, and/or configured to perform another process of the technology described in this specification.

For example, when the communication apparatus is configured to perform the steps, methods, or functions performed by the second communication apparatus in the foregoing method Embodiment 2, the processor 1001 may be configured to perform step S203 in FIG. 11, and/or configured to perform another process of the technology described in this specification; and the transceiver 1002 may be configured to receive a PPDU, and/or configured to perform another process of the technology described in this specification.

For example, when the communication apparatus is configured to perform the steps, methods, or functions performed by the first communication apparatus in the foregoing method Embodiment 3, the processor 1001 may be configured to perform step S301 in FIG. 14, and/or configured to perform another process of the technology described in this specification; and the transceiver 1002 may be configured to perform step S302 in FIG. 14, and/or configured to perform another process of the technology described in this specification.

For example, when the communication apparatus is configured to perform the steps, methods, or functions performed by the second communication apparatus in the foregoing method Embodiment 3, the processor 1001 may be configured to perform step S303 in FIG. 14, and/or configured to perform another process of the technology described in this specification; and the transceiver 1002 may be configured to receive a PPDU, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus can perform the method described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It can be understood that the communication apparatus described in this embodiment of this application may alternatively include more components than those in FIG. 18, or the like. This is not limited in embodiments of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 17, the processing unit 20 may be one or more logic circuits, and the transceiver unit 10 may be an input/output interface, or may be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 19 is a diagram of still another structure of a communication apparatus according to an embodiment of this application. As shown in FIG. 19, the communication apparatus shown in FIG. 19 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 19 shows an example in which the communication apparatus is a chip. The chip includes the logic circuit 901 and the interface 902.

In embodiments of this application, the logic circuit and the interface may be further coupled to each other. A specific manner of connection between the logical circuit and the interface is not limited in this embodiment of this application.

For example, when the communication apparatus is configured to perform the methods, functions, or steps performed by the first communication apparatus in Embodiment 1, the logic circuit 901 is configured to generate a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the interface 902 is configured to output the PPDU. The communication apparatus does not transmit a UWB pulse within duration of the inactive segment.

For example, when the communication apparatus is configured to perform the methods, functions, or steps performed by the second communication apparatus in Embodiment 1, the interface 902 is configured to input a PPDU, where the PPDU includes a plurality of segments (segments) used for sensing, the plurality of segments used for sensing include a first segment and a second segment, a transmission frequency band of the first segment is different from a transmission frequency band of the second segment, and an inactive segment exists between the first segment and the second segment; and the logic circuit 901 is configured to perform sensing measurement based on the first segment and the second segment. The communication apparatus does not receive a UWB pulse within duration of the inactive segment.

It may be understood that for specific descriptions of the plurality of segments used for sensing, the first segment, the second segment, the inactive segment, the control message, and the like, refer to the method Embodiment 1 shown above. Details are not described herein again.

For example, when the communication apparatus is configured to perform the methods, functions, or steps performed by the first communication apparatus in Embodiment 2, the logic circuit 901 is configured to generate a PPDU, where the PPDU includes a plurality of segments (segments) used for sensing, the plurality of segments used for sensing include a first segment and a second segment, and a time gap between the first segment and the second segment is greater than duration of one sensing symbol; and the interface 902 is configured to output the PPDU.

For example, when the communication apparatus is configured to perform the methods, functions, or steps performed by the second communication apparatus in Embodiment 1, the interface 902 is configured to input a PPDU, where the PPDU includes a plurality of segments (segments) used for sensing, the plurality of segments used for sensing include a first segment and a second segment, and a time gap between the first segment and the second segment is greater than duration of one sensing symbol; and the logic circuit 901 is configured to perform sensing measurement based on the first segment and the second segment.

It may be understood that for specific descriptions of the plurality of segments used for sensing, the first segment, the second segment, the enabling information, the control message, and the like, refer to the method Embodiment 2 shown above. Details are not described herein again.

For example, when the communication apparatus is configured to perform the methods, functions, or steps performed by the first communication apparatus in Embodiment 3, the logic circuit 901 is configured to generate a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the interface 902 is configured to output the PPDU. The communication apparatus does not transmit a UWB pulse within duration of the inactive symbol.

For example, when the communication apparatus is configured to perform the methods, functions, or steps performed by the second communication apparatus in Embodiment 3, the interface 902 is configured to input a PPDU, where the PPDU includes a plurality of symbols (symbols) used for sensing, the plurality of symbols used for sensing include a first symbol and a second symbol, a transmission frequency band of the first symbol is different from a transmission frequency band of the second symbol, and an inactive symbol exists between the first symbol and the second symbol; and the logic circuit 901 is configured to perform sensing measurement based on the first symbol and the second symbol. The communication apparatus does not receive the UWB pulse within duration of the inactive symbol.

It may be understood that for specific descriptions of the plurality of symbols used for sensing, the first symbol, the second symbol, the inactive symbol, the control message, and the like, refer to the method Embodiment 3 shown above. Details are not described herein again.

It may be understood that the communication apparatus described in embodiments of this application may implement the method provided in embodiments of this application in a form of hardware, or may implement the method provided in embodiments of this application in a form of software. This is not limited in embodiments of this application.

For specific implementations of the embodiment shown in FIG. 19, refer to the foregoing embodiments. Details are not described herein again.

An embodiment of this application further provides a communication system. The communication system includes a first communication apparatus and a second communication apparatus. The first communication apparatus and the second communication apparatus may be configured to perform the method in any one of the foregoing embodiments.

In addition, this application further provides a computer program. The computer program is used to implement operations and/or processing performed by the first communication apparatus in the methods provided in this application.

This application further provides a computer program. The computer program is used to implement operations and/or processing performed by the second communication apparatus in the methods provided in this application.

This application further provides a computer-readable storage medium. The computer-readable storage medium stores computer code. When the computer code is run on a computer, the computer is enabled to perform operations and/or processing performed by the first communication apparatus in the methods provided in this application.

This application further provides a computer-readable storage medium. The computer-readable storage medium stores computer code. When the computer code is run on a computer, the computer is enabled to perform operations and/or processing performed by the second communication apparatus in the methods provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit transmission method based on frequency band stitching, comprising:
generating, by a communication apparatus, a physical layer protocol data unit PPDU, wherein the PPDU comprises a plurality of segments used for sensing, the plurality of segments used for sensing comprise a first segment and a second segment, and a time gap between the first segment and the second segment is greater than duration of one sensing symbol; and
sending, by the communication apparatus, the PPDU.

2. The method according to claim 1, wherein sending, by the communication apparatus, the PPDU comprises:
transmitting, by the communication apparatus, an ultra-wideband UWB pulse within duration of the first segment and the second segment.

3. The method according to claim 1 or 2, wherein before sending, by the communication apparatus, the PPDU, the method further comprises:
sending, by the communication apparatus, enabling information, wherein the enabling information indicates whether to enable intra-packet frequency band stitching, wherein
when the enabling information indicates to enable intra-packet frequency band stitching, the time gap between the first segment and the second segment is greater than the duration of the one sensing symbol.

4. The method according to any one of claims 1 to 3, wherein a transmission frequency band of the first segment is different from a transmission frequency band of the second segment.

5. The method according to any one of claims 1 to 4, wherein the plurality of segments used for sensing further comprise a third segment and a fourth segment, and a transmission frequency band of the third segment is the same as a transmission frequency band of the fourth segment; and
a time gap between the third segment and the fourth segment is different from the time gap between the first segment and the second segment.

6. The method according to any one of claims 1 to 5, wherein before sending, by the communication apparatus, the PPDU, the method further comprises:
sending, by the communication apparatus, a control message, wherein the control message indicates one or more of the following: an ultra-wideband UWB channel index corresponding to a segment used for sensing, or whether a synchronization field is used for frequency band stitching.

7. The method according to claim 6, wherein the control message further indicates one or more of the following:
a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment, wherein
the frequency band stitching manner comprises in-sequence channel frequency band stitching and out-of-sequence channel frequency band stitching; and the frequency band stitching type comprises one or more of the following: intra-packet frequency band stitching, or intra-packet and inter-packet frequency band stitching.

8. A physical layer protocol data unit transmission method based on frequency band stitching, comprising:
receiving, by a communication apparatus, a physical layer protocol data unit PPDU, wherein the PPDU comprises a plurality of segments used for sensing, the plurality of segments used for sensing comprise a first segment and a second segment, and a time gap between the first segment and the second segment is greater than duration of one sensing symbol; and
performing, by the communication apparatus, sensing measurement based on the first segment and the second segment.

9. The method according to claim 8, wherein receiving, by the communication apparatus, the PPDU comprises:
receiving, by the communication apparatus, an ultra-wideband UWB pulse within duration of the first segment and the second segment.

10. The method according to claim 8 or 9, wherein before receiving, by the communication apparatus, the PPDU, the method further comprises:
receiving, by the communication apparatus, enabling information, wherein the enabling information indicates whether to enable intra-packet frequency band stitching, wherein
when the enabling information indicates to enable intra-packet frequency band stitching, the time gap between the first segment and the second segment is greater than the duration of the one sensing symbol.

11. The method according to any one of claims 8 to 10, wherein a transmission frequency band of the first segment is different from a transmission frequency band of the second segment.

12. The method according to any one of claims 8 to 11, wherein the plurality of segments used for sensing further comprise a third segment and a fourth segment, and a transmission frequency band of the third segment is the same as a transmission frequency band of the fourth segment; and
a time gap between the third segment and the fourth segment is different from the time gap between the first segment and the second segment.

13. The method according to any one of claims 8 to 12, wherein before receiving, by the communication apparatus, the PPDU, the method further comprises:
receiving, by the communication apparatus, a control message, wherein the control message indicates one or more of the following: a UWB channel index corresponding to a segment used for sensing, or whether a synchronization field is used for frequency band stitching.

14. The method according to claim 13, wherein the control message further indicates one or more of the following:
a frequency band stitching manner, a quantity of PPDUs participating in current frequency band stitching, a frequency band stitching type, a total quantity of currently scheduled frequency bands used for frequency band stitching, an overlapping factor between frequency bands used for frequency band stitching, a first UWB channel index used for frequency band stitching, whether a center frequency of a UWB channel increments or decrements, or the time gap between the first segment and the second segment, wherein
the frequency band stitching manner comprises in-sequence channel frequency band stitching and out-of-sequence channel frequency band stitching; and the frequency band stitching type comprises one or more of the following: intra-packet frequency band stitching, or intra-packet and inter-packet frequency band stitching.

15. A physical layer protocol data unit transmission method based on frequency band stitching, comprising:
generating, by a communication apparatus, a physical layer protocol data unit PPDU, wherein the PPDU comprises a plurality of segments used for sensing, the plurality of segments used for sensing comprise a first segment and a second segment, a transmission frequency band of the first segment is different from a transmission frequency band of the second segment, and an inactive segment exists between the first segment and the second segment; and
sending, by the communication apparatus, the PPDU, wherein the communication apparatus does not transmit an ultra-wideband UWB pulse within duration of the inactive segment.

16. The method according to claim 15, wherein at least one of the plurality of segments used for sensing belongs to a sensing field of the PPDU.

17. The method according to claim 15 or 16, wherein at least one of the plurality of segments used for sensing belongs to a synchronization field of the PPDU.

18. The method according to any one of claims 15 to 17, wherein a time length of the inactive segment is different from a time length of the first segment or the second segment.

19. The method according to any one of claims 15 to 18, wherein before sending, by the communication apparatus, the PPDU, the method further comprises:
sending, by the communication apparatus, a control message, wherein the control message indicates one or more of the following:
whether frequency band stitching is enabled, a quantity of PPDUs participating in current frequency band stitching, whether the synchronization field is used for frequency band stitching, a segment used for sensing in the sensing field of the PPDU, or an ultra-wideband UWB channel index corresponding to a segment used for sensing.

20. The method according to claim 19, wherein the control message further indicates one or more of the following:
a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements, wherein
the frequency band stitching manner comprises in-sequence channel frequency band stitching and out-of-sequence channel frequency band stitching; and the frequency band stitching type comprises one or more of the following: intra-packet frequency band stitching, inter-packet frequency band stitching, or intra-packet and inter-packet frequency band stitching.

21. A physical layer protocol data unit transmission method based on frequency band stitching, comprising:
receiving, by a communication apparatus, a physical layer protocol data unit PPDU, wherein the PPDU comprises a plurality of segments used for sensing, the plurality of segments used for sensing comprise a first segment and a second segment, a transmission frequency band of the first segment is different from a transmission frequency band of the second segment, and an inactive segment exists between the first segment and the second segment; and the communication apparatus does not receive an ultra-wideband UWB pulse within duration of the inactive segment; and
performing, by the communication apparatus, sensing measurement based on the first segment and the second segment.

22. The method according to claim 21, wherein at least one of the plurality of segments used for sensing belongs to a sensing field of the PPDU.

23. The method according to claim 21 or 22, wherein at least one of the plurality of segments used for sensing belongs to a synchronization field of the PPDU.

24. The method according to any one of claims 21 to 23, wherein a time length of the inactive segment is different from a time length of the first segment or the second segment.

25. The method according to any one of claims 21 to 24, wherein before receiving, by the communication apparatus, the PPDU, the method further comprises:
receiving, by the communication apparatus, a control message, wherein the control message indicates one or more of the following:
whether frequency band stitching is enabled, a quantity of PPDUs participating in current frequency band stitching, whether the synchronization field is used for frequency band stitching, a segment used for sensing in the sensing field of the PPDU, or an ultra-wideband UWB channel index corresponding to a segment used for sensing.

26. The method according to claim 25, wherein the control message further indicates one or more of the following:
a frequency band stitching manner, a frequency band stitching type, a total quantity of currently scheduled frequency bands used for frequency band stitching, an overlapping factor between frequency bands used for frequency band stitching, a first UWB channel index used for frequency band stitching, or whether a center frequency of a UWB channel increments or decrements, wherein
the frequency band stitching manner comprises in-sequence channel frequency band stitching and out-of-sequence channel frequency band stitching; and the frequency band stitching type comprises one or more of the following: intra-packet frequency band stitching, inter-packet frequency band stitching, or intra-packet and inter-packet frequency band stitching.

27. A communication apparatus, comprising a module or unit configured to perform the method according to any one of claims 1 to 7 or claims 15 to 20.

28. A communication apparatus, comprising a module or unit configured to perform the method according to any one of claims 8 to 14 or claims 21 to 26.

29. A communication apparatus, comprising:
one or more processors, wherein the one or more processors are coupled to one or more memories; and
the one or more memories are configured to store a computer program, and the one or more processors are configured to execute the computer program stored in the one or more memories, to enable the communication apparatus to perform the method according to any one of claims 1 to 26.

30. A readable storage medium, configured to store a program, wherein the program is executed by one or more processors, to enable an apparatus comprising the one or more processors to perform the method according to any one of claims 1 to 26.

31. A communication system, comprising a communication apparatus configured to perform the method according to any one of claims 1 to 7 and a communication apparatus configured to perform the method according to any one of claims 8 to 14; or
a communication apparatus configured to perform the method according to any one of claims 15 to 20 and a communication apparatus configured to perform the method according to any one of claims 21 to 26.
